# EUROPEAN PATENT SPECIFICATION

(11) **EP 4 361 860 B1**
(45) Date of publication and mention of the grant of the patent: **01.07.2026**
(21) Application number: 22828302.4
(22) Date of filing: 15.06.2022
(51) Int. Cl.: G06F 21/55, G06F 21/54, G06F 9/44, G06F 21/62, G06F 9/455

(54) **PROGRAM, INFORMATION PROCESSING DEVICE, AND METHOD**
PROGRAMM, INFORMATIONSVERARBEITUNGSVORRICHTUNG UND VERFAHREN
PROGRAMME, DISPOSITIF DE TRAITEMENT D'INFORMATIONS, ET PROCÉDÉ

(30) Priority: 22.06.2021 JP 2021103220
(43) Date of publication of application: 01.05.2024
(73) Proprietor: Digital Information Technologies Corporation, Tokyo 104-0032 (JP)
(72) Inventor: IIJIMA, Noritaka, Tokyo 104-0032 (JP); NAKAJIMA, Tsutomu, Tokyo 104-0032 (JP); ONISHI, Koji, Tokyo 104-0032 (JP)
(74) Representative: AWA Sweden AB
(86) International application number: PCT/JP2022/024004
(87) International publication number: WO 2022/270385

(56) References cited:
- WO-A1-2009/102006
- WO-A1-2009/102006
- JP-A- 2008 165 325
- US-A1- 2003 115 458
- US-A1- 2019 394 219
- WIN THU YEIN ET AL: "PROTECT: Container Process Isolation Using System Call Interception", 2017 14TH INTERNATIONAL SYMPOSIUM ON PERVASIVE SYSTEMS, ALGORITHMS AND NETWORKS & 2017 11TH INTERNATIONAL CONFERENCE ON FRONTIER OF COMPUTER SCIENCE AND TECHNOLOGY & 2017 THIRD INTERNATIONAL SYMPOSIUM OF CREATIVE COMPUTING (ISPAN-FCST-ISCC), IEEE, 21 June 2017 (2017-06-21), pages 191 - 196, XP033273567, DOI: 10.1109/ISPAN-FCST-ISCC.2017.24

## Description

### TECHNICAL FIELD

The present disclosure relates to a program, an information processing device, and a method.

### BACKGROUND

Conventionally, security countermeasure technology in virtualization environment has been in demand. There is the technology of "a storage medium for analyzing malware by a virtual computing machine that runs on a physical computing machine including a processor and a memory, the storage medium including a first step in which an analyzing unit that runs on a guest OS of the virtual computing machine obtains a request to the guest OS from the malware, and a second step in which, when the request from the malware includes a request related to virtualization environment, the analyzing unit gives, to the malware, a fake response to the request" (Patent Literature 1).

Additionally, a "security system" "provides" "a security virtual machine that executes a security program expressed in an instruction set of the security virtual machine". "The security system" "stores" "a security program" in "an instruction store" of "the security virtual machine". "When a security implementation event occurs, the security virtual machine" "uses data of the security implementation event" to "execute an instruction" in "the instruction store" to "implement a security policy" (Patent Literature 2). WIN THU YEIN ET AL: "PROTECT: Container Process Isolation Using System Call Interception" relates to an access control solution. WO2009/ 102006 A1 relates to an access control apparatus. US2019/394219 A1 relates to a method in a container system.

### CITATION LIST

### PATENT LITERATURE

Patent Literature 1: Japanese Patent Laid-Open No. 2018-081514
Patent Literature 2: Japanese Patent Laid-Open No. 2005-316964

### SUMMARY

### TECHNICAL PROBLEM

However, when the technology of Patent Literature 1 is applied to a container-type virtualization environment, it is considered that the security countermeasure for each container can be taken before using a container image. However, there is a problem in that, after the container image is deployed to a container host, and while a container is running after the container is generated based on the container image, a common OS is used, and therefore the security countermeasure for the container image of each container cannot be taken.

Additionally, when the technology of Patent Literature 2 is applied to a container-type virtualization environment, although a system call is simulated by a security virtual machine, when the simulation is performed, processing load will be applied, and the merit of the container-type virtualization that the load on a system resource can be reduced will be compromised.

Therefore, in the present disclosure, a technology capable of protecting a running container image is provided.

### SOLUTION TO PROBLEM

According to one embodiment, a program for operating a computer includes a processor, the program causing the processor to execute: a step of obtaining a parameter at a time when a system call function is called by a system call in a container-type virtualization environment; a step of calling a first system call function from a kernel, and returning a processing result of the first system call function, when a processing target in the first system call function to be called that is indicated by the parameter is not a monitoring target that affects an identity of a container image; and a step of returning a result as in a case where processing by the system call is successfully executed, or a processing result indicating an error, without calling the first system call function, when the processing target in the first system call function to be called that is indicated by the parameter is the monitoring target.

### ADVANTAGEOUS EFFECTS OF INVENTION

According to the present disclosure, a running container image can be protected.

### BRIEF DESCRIPTION OF THE DRAWINGS

Figure 1 is a diagram illustrating the configuration of an information processing system 1.
Figure 2 is a block diagram of an information processing device 10.
Figure 3 is a diagram illustrating an example of the flow of a conventional system call.
Figure 4 is a diagram illustrating an example of the flow of the conventional system call.
Figure 5 is a diagram illustrating the processing of a system call of the present disclosure.
Figure 6 is a diagram illustrating an example of a screen for selecting a container that is a monitoring target.
Figure 7 is a flowchart illustrating monitoring indication processing of the information processing device 10.
Figure 8 is a flowchart illustrating monitoring processing of the information processing device 10.
Figure 9 is a flowchart illustrating monitoring target specification processing of the information processing device 10.
Figure 10 is a diagram illustrating an example of the operation image of containers in a container host.
Figure 11 is a diagram illustrating an example in a case where an image in a container host is deleted.
Figure 12 is a diagram illustrating an example in a case where an image in a container host is falsified.
Figure 13 is a diagram illustrating the configuration of an information processing system 2.
Figure 14 is a block diagram of an information processing device 50.
Figure 15 is a flowchart illustrating monitoring processing by the information processing device 50.

### DETAILED DESCRIPTION

Hereinafter, referring to the drawings, embodiments of the present disclosure will be described. In the following description, the same numerals are assigned to the same components. The same applies to their names and functions. Accordingly, a detailed description about them will not be repeated.

### < First Embodiment >

### (Summary of the Present Disclosure)

The present disclosure describes a program, an information processing device, and a method that monitor, in a container-type virtualization environment, a parameter at the time when a system call function is called by a system call, and protect a container image.

In order for a container-type virtualization environment on a container host to run stably, it is necessary to perform protection against the deletion of and the falsification by overwriting to the directory and files of a container image arranged on a container host. At the same time, it is also necessary to perform protection against the modification of the directory path, directory name, and file names of a container image, and the like so that an inconsistency does not occur in the setup information held by container-related applications. In order to perform these kinds of protection, from a viewpoint that, unlike a conventional virtual machine, a container-type virtualization environment is operated by sharing a container host's kernel, in the present disclosure, the system call of the container host's kernel is monitored. In the present disclosure, a processor obtains a parameter in a second system call function by rewriting a target to be called by a system call that can affect the identity of a container image, such that the second system call function for which the information of a system call table is separately prepared is called. Then, the processor performs determination of whether or not a processing target indicated by the parameter is a monitoring target, and when it is not the monitoring target, the processor calls a first system call function, which is a system call function that is to be originally called in the second system call function, and returns the processing result. On the other hand, when the target to be processed indicated by the parameter is the monitoring target, the processor disables the processing of the original system call in the second system call function. That is, the present disclosure disables only the system call to the monitoring target that affects the identity of a container image. The disabling is performed by, for example, performing no processing to a system call, returning an error, or the like.

### < 1. Configuration of Information Process System 1 >

Using Figure 1 and Figure 2, an information processing system 1 according to the present disclosure will be described.

Figure 1 is a diagram illustrating the configuration of the information processing system 1. The information processing system 1 includes an information processing device 10, an administrator terminal 20, and a network 30.

The information processing device 10 is, for example, a laptop personal computer, a computer such as a rackmount or tower computer, or the like. The information processing device 10 may be composed by a plurality of information processing devices 10, and the like.

The information processing device 10 is composed by including a processor 11, a memory 12, a storage 13, a communication IF 14, and an input/output IF 15.

The processor 11 is hardware for executing instruction sets described in programs, and is composed by an arithmetic unit, a register, a peripheral circuit, and the like.

The memory 12 is for temporarily storing programs, data that is processed by the programs, and the like, and is, for example, a volatile memory such as a DRAM (Dynamic Random Access Memory).

The storage 13 is a storage device for saving data, and is, for example, a flash memory, an HDD (Hard Disc Drive), or an SSD (Solid State Drive).

The communication IF 14 is an interface for inputting and outputting signals, in order for the information processing device 10 to communicate with an external device. The communication IF 14 is connected to the network 30, such as the Internet or a wide area Ethernet, in a wired or wireless manner.

The input/output IF 15 functions as an interface with an input device (for example, a pointing device such as a mouse, a keyboard) for receiving an input operation, and an output device (a display, a speaker, and the like) for presenting information.

The administrator terminal 20 is an information processing device operated by a user who manages a container-type virtualization environment executed in the information processing device 10. The administrator terminal 20 is, for example, a laptop personal computer, a computer such as a rackmount or tower computer, or the like.

The information processing device 10 and the administrator terminal 20 are configured to be able to communicate with each other via the network 30.

Figure 2 is a block diagram illustrating the functional configuration of the information processing device 10. As illustrated in Figure 2, the information processing device 10 includes a communication unit 110, a storage unit 120, and a control unit 130.

The communication unit 110 performs processing for the information processing device 10 to communicate with an external device.

The storage unit 120 stores data and programs used by the information processing device 10. The storage unit 120 stores data related to containers, a system call table, a group of first system call functions, a group of second system call functions, and the like.

The data related to containers is data required for the information processing device 10 to realize the container-type virtualization environment. The data related to containers is container images, data of containers, and the like.

The system call table is a system call table defined in advance in the system.

The group of first system call functions are a collection of system call functions defined in advance in the system. The group of second system call functions is a collection of system call functions defined in the present disclosure. Details will be described later.

The control unit 130 demonstrates the functions illustrated in a reception control unit 131, a transmission control unit 132, a container control unit 133, a monitoring instruction unit 134, a rewriting unit 135, an obtaining unit 136, a monitoring unit 137, and a display unit 138 by performing processing according to programs by the processor 11 of the information processing device 10.

The reception control unit 131 controls processing in which the information processing device 10 receives signals from an external device according to a communications protocol.

The transmission control unit 132 controls processing in which the information processing device 10 transmits signals to the external device according to the communications protocol.

The container control unit 133 realizes the container-type virtualization environment. Specifically, upon receiving a container generation signal, the container control unit 133 generates a container from a container image stored in the storage unit 120. The container control unit 133 realizes the container-type virtualization environment by using, for example, DOCKER (registered trademark), or the like.

The monitoring instruction unit 134 gives indication for starting and ending the monitoring of a system call to each unit.

Arbitrary timing can be employed for the timing for starting monitoring. A container image can be better protected if monitoring is started at the latest at the timing when a container is generated. Therefore, it is preferable that the timing for starting monitoring is when a container host is activated, when a container is first generated on the container host based on a container image arranged on the container host by the container control unit 133, or the like. Note that the timings for starting and ending monitoring may be manually indicated, may be periodic, or the like, or may be performed at all times.

Additionally, the monitoring instruction unit 134 ends monitoring at the timing when an indication to end monitoring is given, the timing when all containers are deleted, and the like.

The rewriting unit 135 rewrites the system call table such that, when a processing target in a system call function to be called is a monitoring target that affects the identity of a container image, a second system call function is read that returns a result as in a case where the processing by the system call function is successfully executed, or a result indicating an error. Specifically, the rewriting unit 135 rewrites the address of a first system call function, which is the monitoring target of the system call table, to the address of a second system call function. Note that the second system call function is configured to include the address of the corresponding first system call function. This is because, in a case where a parameter is checked in the second system call function, when it is safe, the original first system call function is called to perform processing. Additionally, the rewriting unit 135 may be configured to replace the first system call function with the second system call function.

A monitoring target is defined in advance as a combination of the content of processing of a process that calls a system call function, and at least one of the target file and target directory of the processing of the process. The monitoring target is, for example, at least one of the combinations of a directory, a file and processing of the following (1) to (14).
(1) deletion of a file under a directory where a container image is stored
(2) deletion of a directory where a container image is stored
(3) opening in a write mode to a file under a directory where a container image is stored
(4) movement of a file under a directory in which a container image is stored
(5) movement of a directory where a container image is stored
(6) modification of a file name under a directory where a container image is stored
(7) modification of the name of a directory where a container image is stored
(8) a hard link to a directory where a container image is stored
(9) a hard link to a file under a directory where a container image is stored
(10) addition of a directory under a directory where a container image is stored
(11) a symbolic link to a directory where a container image is stored
(12) a symbolic link to a file under a directory where a container image is stored
(13) attribute change of a directory where a container image is stored
(14) attribute change of a file under a directory where a container image is stored
(15) mounting of other file system on a directory path including a directory where a container image is stored and those under the directory
(16) unmounting of a file system in which a container image is stored

The reason the processing to a directory and the like includes a hard link is for preventing directories, files, and the like from being falsified via a hard link, in addition to under the directory where a container image is stored.

Additionally, the rewriting unit 135 rewrites the system call table at the timing when a kernel is read, when a monitoring start indication is given by the monitoring instruction unit 134, and the like. In addition, the rewriting unit 135 returns the rewritten system call table, when a monitoring end indication is given by the monitoring instruction unit 134.

The obtaining unit 136 obtains a parameter at the time when the first system call function is called by a system call. Specifically, the obtaining unit 136 obtains, as the parameter at the time when the first system call function is called, a target and processing that are handled by the system call function.

The monitoring unit 137 determines whether or not a processing target in the first system call function to be called is a monitoring target that affects the identity of a container image. Specifically, first, the monitoring unit 137 calls the system call function to be called by referring to the rewritten system call table. In case of a system call function that is not rewritten, the first system call function is called by the system call table. The monitoring unit 137 executes the first system call function, and returns the processing result.

When the address is rewritten, the monitoring unit 137 will call a second system call function. When the called system call function is the second system call function, the monitoring unit 137 determines whether or not it is a monitoring target by using the parameter obtained by the obtaining unit 136. Specifically, the monitoring unit 137 determines whether or not the parameter is predetermined processing to the above-described directory and files.

When the monitoring unit 137 determines that the parameter is a monitoring target, the monitoring unit 137 returns the result by the second system call function to the second system call function. On the other hand, when the monitoring unit 137 determines that the parameter is not a monitoring target, the monitoring unit 137 calls an actual first system call function. In this case, the monitoring unit 137 executes the first system call function, and returns the processing result.

Note that the second system call function may have a function of determining whether or not the parameter is the predetermined processing to the above-described directory and files. In this case, when the determination result is a monitoring target, the second system call function returns a result as in a case where the processing by the actual first system call function is successfully executed, or a processing result indicating an error. Additionally, in this case, when the determination result is not a monitoring target, the second system call function calls the actual first system call function to execute processing, and returns the processing result.

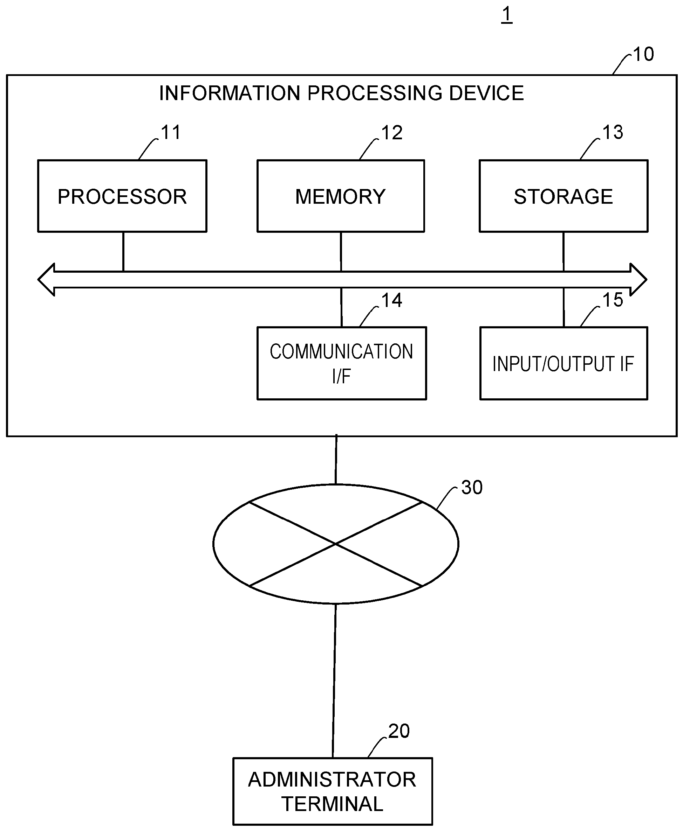

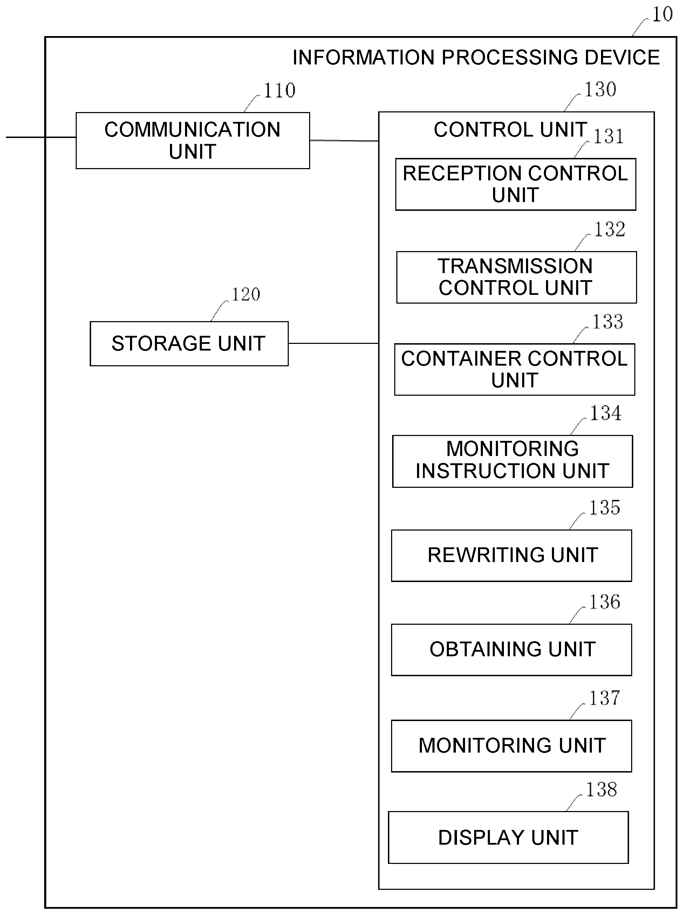

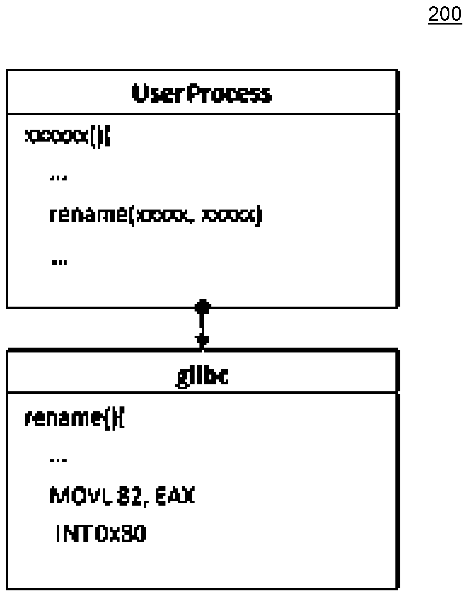

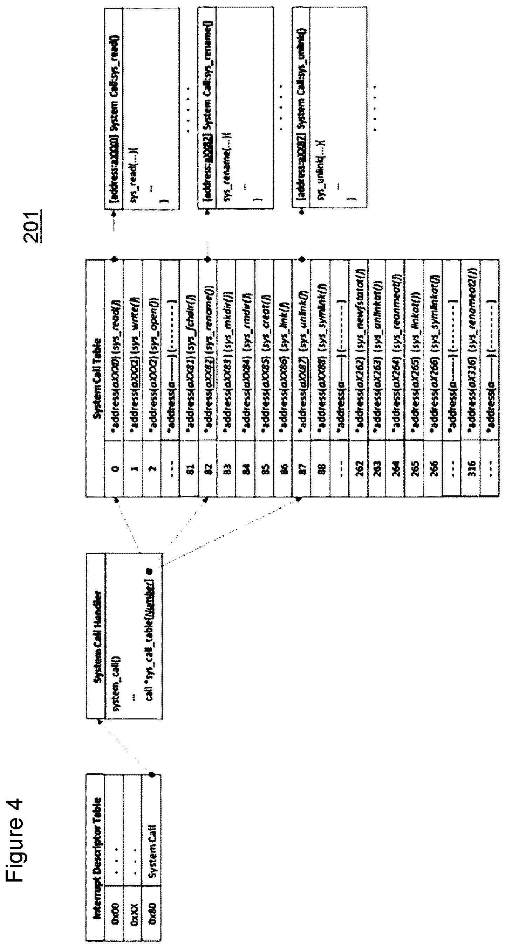

Figure 3 and Figure 4 are diagrams illustrating an example of the flow of a conventional system call. The example of Figure 3 and Figure 4 is a case of a x86_64 architecture. When the user process (User Process in Figure 3) issues a processing request called rename, a software interrupt for executing a system call is generated via a shared library (glibc in Figure 3). A kernel is called by a system call handler (System Call Handler in Figure 4) from an interrupt descriptor table (Interrupt Descriptor Table in Figure 4). The kernel calls and executes each system call function from a system call table (System Call Table in Figure 4) based on a system call number in the system call handler. That is, all system call functions are called via the system call table.

For the above-described monitoring, the present disclosure prepares the second system call function that returns a result as in a case where the processing by the first system call function is successfully executed, or a result indicating an error. When the rewriting unit 135 receives an indication for starting monitoring from the monitoring instruction unit 134, the rewriting unit 135 rewrites the address of the first system call function that is the monitoring target of the system call table to the address of the second system call function.

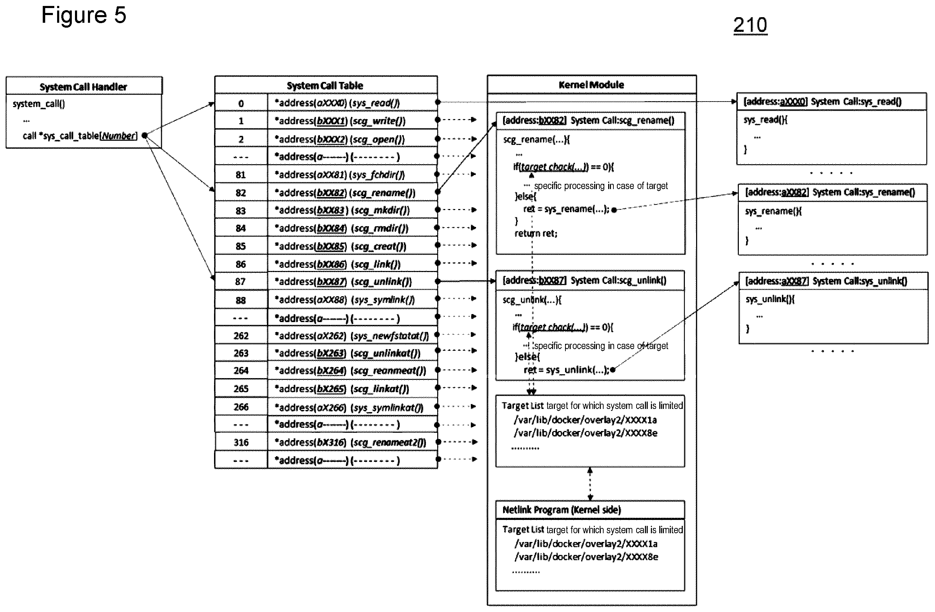

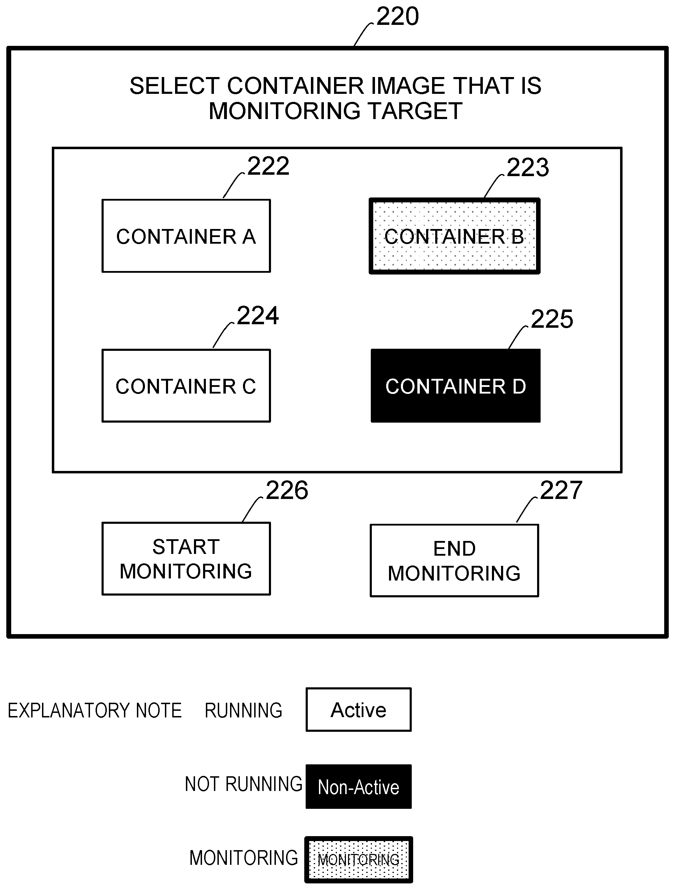

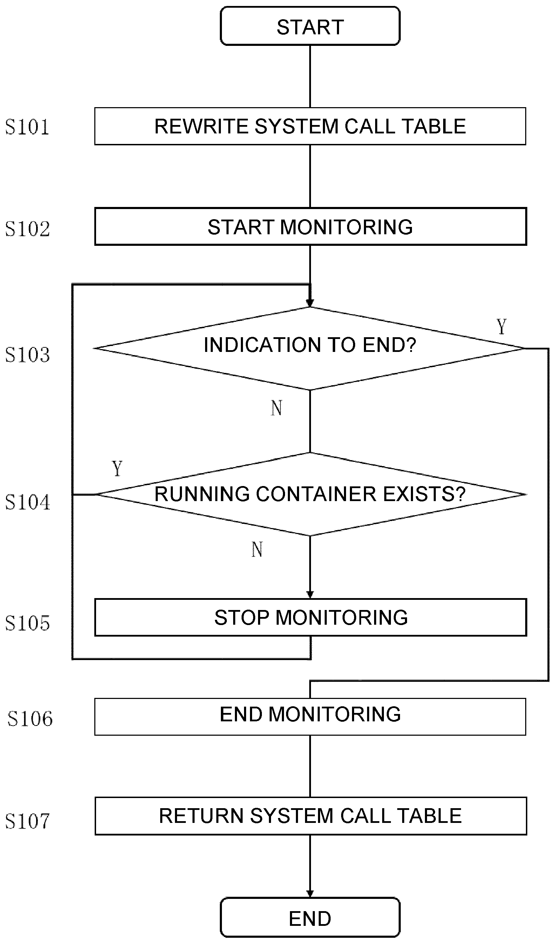

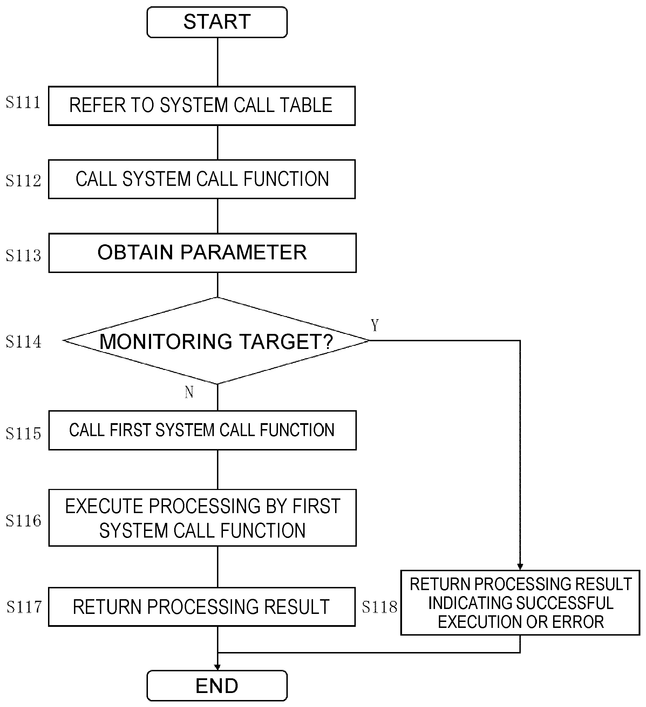

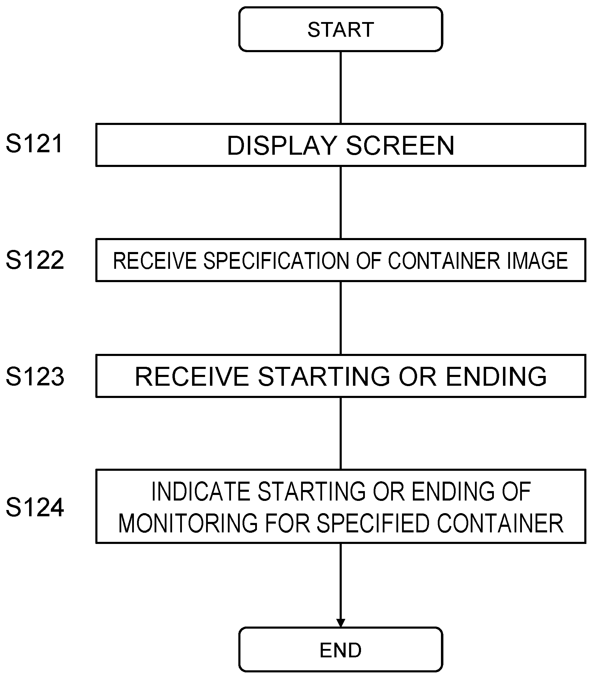

Figure 5 is a diagram illustrating the processing of a system call of the present disclosure. As illustrated in Figure 5, it is configured such that the second system call function (system call function in Kernel Module in Figure 5) is called by rewriting the system call table.

In this manner, by rewriting the address of the first system call function that is the monitoring target of the system call table to the address of the second system call function, the second system call function will be called, without calling the actual first system call function that executes the predetermined processing to the above-described directory and files. Although the second system call function returns a result as in a case of successful execution or an error, the second system call function does not execute the actual first system call function. Therefore, falsification to the above-described directory and files, and the like can be prevented whether the falsification is from a container host side or from a malicious host side, and a container image can be protected. Note that, when the first system call function that is a monitoring target does not execute the predetermined processing to the above-described directory and files, it is set such that the actual first system call function is indirectly called.

The display unit 138 displays a screen for receiving specification of at least one container image of a plurality of container images in the container-type virtualization environment, and cancellation of the specification. Specifically, the display unit 138 displays the screen for receiving the specification of a container image. The specified container image serves as a parameter to be obtained by the obtaining unit 136, and a container image to be determined by the monitoring unit 137. The display unit 138 displays, for example, the screen on the administrator terminal 20.

Figure 6 is a diagram illustrating an example of a screen for selecting a container that is a monitoring target. A screen 220 includes container image buttons 222 to 224, a monitoring start button 226, and a monitoring end button 227.

The container image buttons 222 to 224 are buttons for receiving the specification of a container image. Additionally, the container image buttons 222 to 224 display the states of the containers indicated by container images. When a container image button is not colored, it indicates that the container of the container image indicated by the container image button is generated. When a container image button is colored, it indicates that the container of the container image indicated by the container image button is not generated. Additionally, when a container image button is shaded, it indicates that the container image indicated by the container image button is a monitoring target. When a container image button is pressed, the container image indicated by the container image button is specified.

The monitoring start button 226 is a button for starting the monitoring of a specified container image. Specifically, when the monitoring start button 226 is pressed, the monitoring instruction unit 134 is caused to start the monitoring of the container image of a currently pressed container image button 222 to 224.

The monitoring end button 227 is a button for ending the monitoring of the specified container image. Specifically, when the monitoring start button 226 is pressed, the monitoring instruction unit 134 is caused to end the monitoring of the container image of the currently pressed container image button 222 to 224.

In the container-type virtualization environment, there is a possibility that container images are frequently replaced or the like. Therefore, the display unit 138 displays an interface such as the screen 220, thereby enabling the user to appropriately and explicitly perform indication.

Note that the container-type virtualization environment of the present disclosure may be configured to perform an API cooperation with a container orchestration tool such as Kubernetes (registered trademark), and to perform starting of monitoring and cancellation of monitoring of a container image arranged on the container host.

### < 2. Operation >

Hereinafter, the processing in the information processing device 10 will be described with reference to the drawings.

### < 2. 1. Monitoring Indication Processing >

Figure 7 is a flowchart illustrating an example of the flow of performing monitoring indication processing by the information processing device 10. The information processing device 10 executes the processing at the timing when the kernel is read into the information processing device 10. Note that the timing for starting monitoring may be configured such that monitoring is automatically started when the container host is activated, when a container is first generated on the container host based on a container image arranged on the container host by the container control unit 133, and the like. Additionally, the timing for starting monitoring may be configured such that monitoring is started when the monitoring start indication is given by the monitoring instruction unit 134.

In step S101, the rewriting unit 135 rewrites the address of the first system call function that is the monitoring target of the system call table to the address of the second system call function.

In step S102, the monitoring instruction unit 134 starts monitoring of a system call.

In step S103, the processor 11 determines whether or not there was an indication to end the monitoring.

When there was no indication to end the monitoring (N in the above-described step S103), in step S104, the monitoring instruction unit 134 determines whether or not there is any running container.

When there is a running container (N in the above-described step S104), it returns to step S103, and the monitoring instruction unit 134 continues monitoring until there is an indication to end. At this time, when the monitoring is stopped, the monitoring instruction unit 134 resumes the monitoring.

On the other hand, when there is no running container (Y in the above-described step S104), in step S105, the monitoring instruction unit 134 stops the monitoring.

On the other hand, when there is an indication to end the monitoring (Y in the above-described step S103), in step S106, the monitoring instruction unit 134 issues an indication to end the monitoring of a system call.

In step S107, the rewriting unit 135 restores the system call table, and ends the processing.

### < 2.2. Monitoring Processing >

Figure 8 is a flowchart illustrating an example of the flow of performing monitoring processing by the information processing device 10. In a situation where monitoring is started, the information processing device 10 executes the processing at the timing when the second system call function is called by the rewritten system call table. Note that, when a system call function that is not rewritten is called, ordinary system call function calling processing is performed.

In step S111, the monitoring unit 137 refers to the system call table in which a system call function to be called has been rewritten. Accordingly, the monitoring unit 137 obtains the address of a second system call function.

In step S112, the monitoring unit 137 calls the second system call function to be called.

In step S113, the monitoring unit 137 obtains a parameter at the time when the system call function is called by a system call.

In step S114, the monitoring unit 137 determines whether or not the parameter is a monitoring target.

When it is not a monitoring target (N in the above-described step S114), in step S115, the monitoring unit 137 calls a first system call function.

In step S116, the monitoring unit 137 executes processing by the called first system call function.

In step S117, the monitoring unit 137 returns the processing result, and ends the processing.

On the other hand, when it is a monitoring target (Y in the above-described step S114), in step 118, the monitoring unit 137 returns a result as in a case where the processing by the first system call function is successfully executed, or a processing result indicating an error, then the processing ends.

### < 2.3. Monitoring Target Specification Processing >

Figure 9 is a flowchart illustrating monitoring target specification processing by the information processing device 10. The information processing device 10 executes the processing at an arbitrary timing.

In step S121, the display unit 138 displays the screen for receiving specification of at least one container image of a plurality of container images in the container-type virtualization environment, and cancellation of the specification.

In step S122, the display unit 138 receives the specification of the container image.

In step S123, the display unit 138 receives starting or ending of monitoring.

In step S124, the display unit 138 causes the monitoring instruction unit 134 to start or end the monitoring of the currently specified container image, and ends the processing.

### < 3. Brief Summary >

As described above, according to the present disclosure, in the container-type virtualization environment, a parameter at the time when the first system call function is called by the system call is obtained, and when the processing target in the first system call function to be called that is indicated by the parameter is not a monitoring target that affects the identity of a container image, the first system call function is called from the kernel, and the processing result of the first system call function is returned, and when the processing target in the first system call function to be called that is indicated by the parameter is the monitoring target, the first system call function is not called, and a result as in a case where the processing by the system call is successfully executed, or a processing result indicating an error is returned, and therefore a running container image can be protected.

Compared with a case where an entire OS is virtualized and activated as in a conventional server virtualization environment, the container-type virtualization environment has the advantages that activation is very fast, and the resource of a host OS to be used is less. It has been pointed out that the security countermeasures for the container-type virtualization environment cannot be addressed by conventional security countermeasures in many cases (For example, Application Container Security Guide (Special Publication 800-190) of security countermeasures by NIST (U.S. National Institute of Standards and Technology)). For example, the current security countermeasures for containers focus on monitoring of containers, and a countermeasure such as disconnecting a container is taken when an abnormality is detected. Since such a security countermeasure requires to perform definition, management, updating, and the like by the functions of a container or an onboard application, the load is very heavy, and erroneous detection or non-detection may occur due to lack of definition.

On the other hand, it is conceivable for monitoring software to employ, as a security countermeasure for containers, container images that are the generation sources of containers. For example, there is a method of performing scanning for vulnerabilities, granting an electronic signature to a container image, and the like before the monitoring software uses the container image, and checking whether the container image is falsified or the like before using the container image. However, after the container image is deployed to a container host, and while a container is running after the container is generated based on the container image, a common OS is used, and therefore, the security countermeasure for the container image of each container cannot be taken.

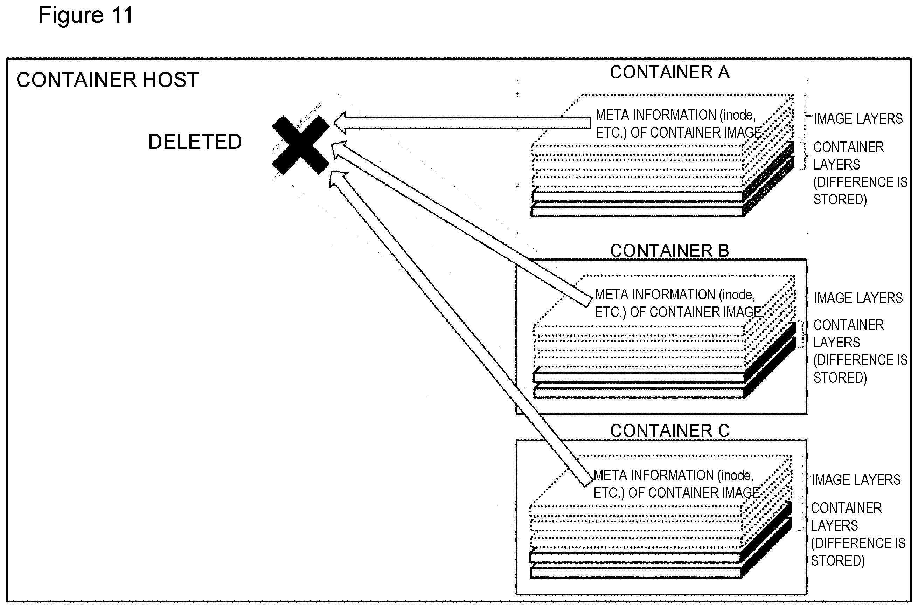

Figure 11 is a diagram illustrating an example of the operation image of containers in a container host. As shown in Figure 1, the file system and meta information required for execution of containers are stored in a container image 1010 (image layers) deployed on the file system on a container host 1000. The file system stores a portion applicable to an OS such as /etc, /bin, and /usr under a root directory, and a directory hierarchy and files such as applications used by the containers.

As illustrated in Figure 11, each container operates on the container host by using a large portion of the container image 1010, which is a generation source, the portion corresponding to the OS, an application portion, and the like. The container side can only read the information of the container image, and cannot perform rewriting, and the like. However, when seen from the container host side, the container image is merely the directory, a file group, and the like on the OS, and the container host can perform addition / modification / deletion to the container image.

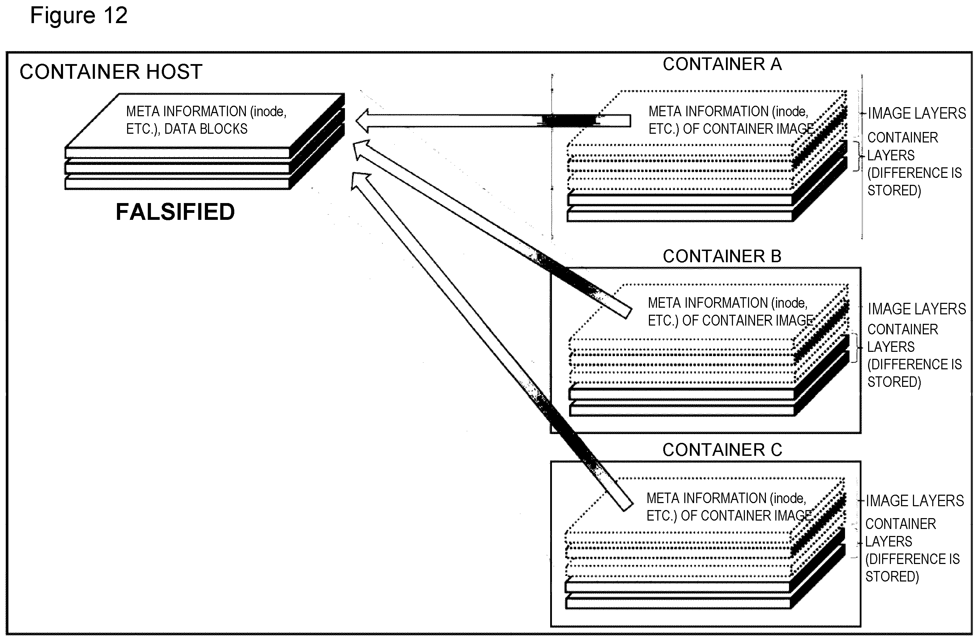

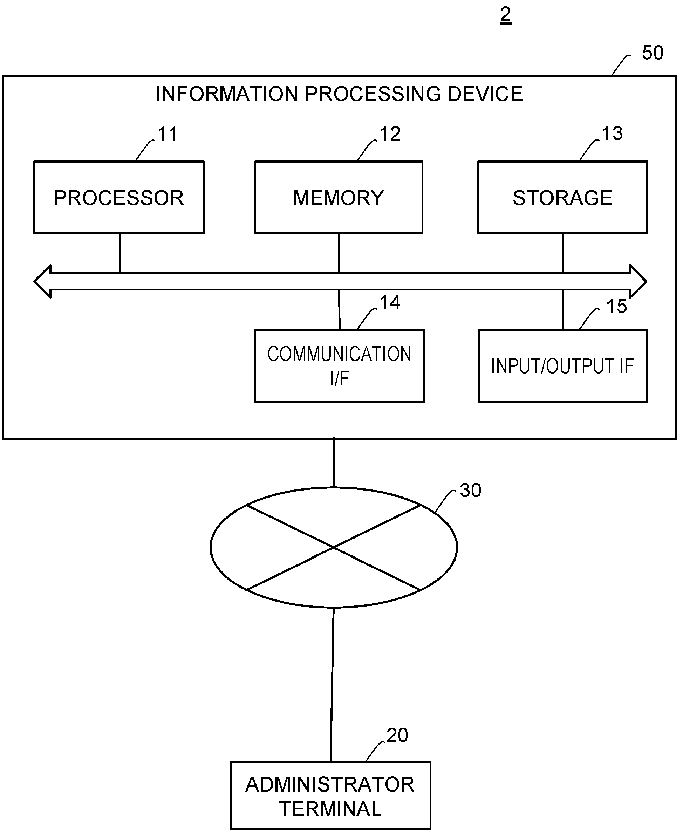

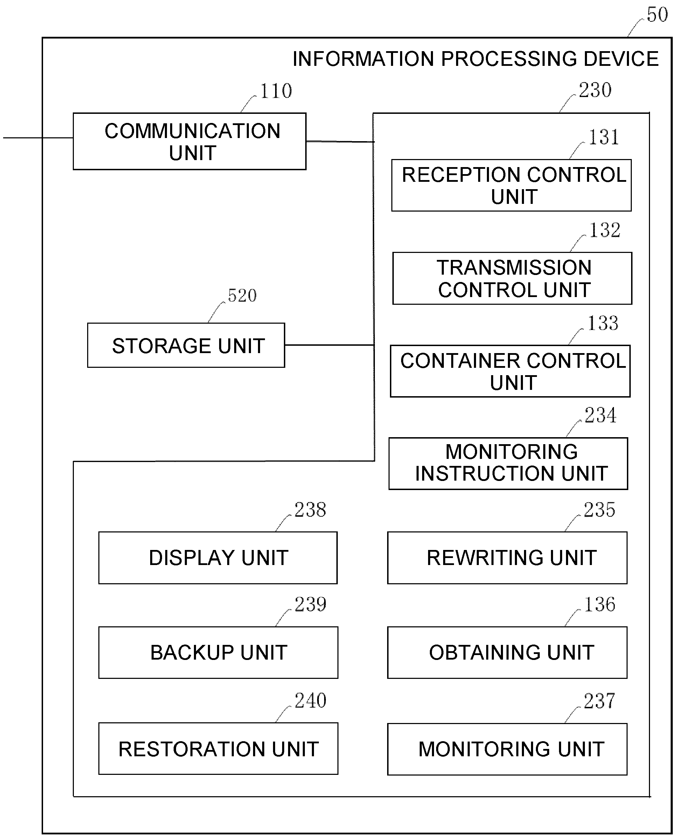

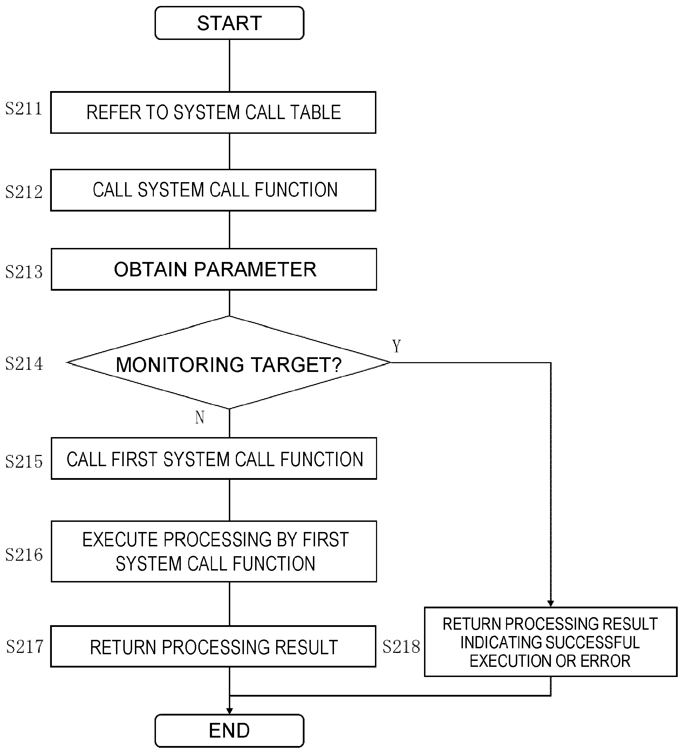

Figure 12 is a diagram illustrating an example in a case where an image in a container host is deleted. When a container image is deleted from the container host side, since there is no reference destination of meta information held by the container side, all the containers are rendered inoperable in an instant.

Since the data (data blocks, and the like) of the reference destination of the container image side stored in the meta information of the container image held by the container side do not exist, the containers generated from the deleted image stop (become inoperable) all at once at the timing of deletion. Additionally, when partially deleted, the operation of the containers may be affected (the behavior of the containers may become inappropriate).

Figure 13 is a diagram illustrating an example in a case where an image in a container host is falsified. When falsification of a container image is performed such that the reference destination of meta information held by container side is not changed, that is, when falsification is performed to a file of the container image in an overwriting manner, the container side may stop or change their operations at the timing when the container side read the file. Since the data (data blocks, and the like) of the reference destination of the container image side stored in the meta information of the container image held by the container side do not exist, the containers generated from the deleted image stop (become inoperable) all at once at the timing of deletion. Additionally, when partially deleted, the operation of the containers may be affected (the behavior of the containers may become inappropriate).

The above-described guideline describes that
- a reliable container image that does not contain malware or the like should be used,
- a container host on which containers operate should have minimum necessary functions and should not have unnecessary functions,
- access control to a container image, such as SELinux and AppArmor, should be performed so that the aforementioned deletion and falsification to a container image cannot be performed, and the like.

In the case of SELinux, since access control by extended attributes is performed, it is difficult to perform dynamic and flexible setting, and even if the extended attributes that perform access control are changed, there is no method for detecting the change. Additionally, in the case of AppArmor or the like, although access control from a program that has been set can be performed, access control to programs that have not been set cannot be performed.

As described above and as described in the guideline, when it is impossible to escape from the risk of vulnerabilities of a container host itself over time, by reliably protecting a container image on the container host that is the origin of containers by the technology of the present disclosure, sufficient security countermeasures to the containers can be realized.

### < Second Embodiment >

### (Summary of Second Embodiment)

In the above-described first embodiment, it has been described that the technology of the present disclosure can protect a running container image. In a second embodiment, it will be described that the technology of the present disclosure can protect data other than a container image.

In the second embodiment, a description will be given of a program, an information processing device, and a method according to the technology of the present disclosure that monitor a parameter at the time when a system call function is called by a system call, and that protect, as data to be protected, difference data used for backup of a container image.

In a container-type virtualization environment, the technology (for example, UnionFS, and the like) of transparently overlaying files and directories of a file system is used. In this case, the container-type virtualization environment can have a file system including a first layer, a second layer, and a third layer.

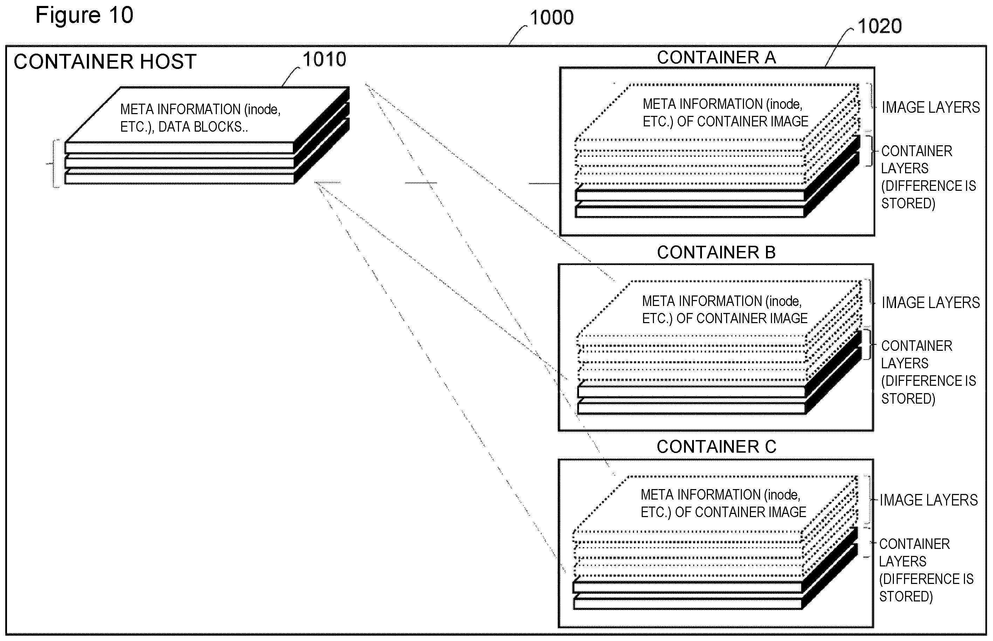

The first layer is a layer that manages a container image itself. For example, it corresponds to the image layers in Figure 10. The target of protection in the first embodiment is the container image managed in the first layer.

The second layer is a layer that manages the difference data between the container image in the first layer and the state of the container image as it should be, due to an operation performed to the container image. For example, it corresponds to a container layer in Figure 10. The difference data is stored in the storage unit or the like at an arbitrary timing as data used for backup.

The third layer is a file system that is visible from the inside of a container. Specifically, it performs an operation to a container image, according to the authority of a process. For example, when a deletion instruction for a predetermined container image comes from a process having the authority to delete a container image, the file system of the third layer passes the fact that the container image has been deleted to the file system of the second layer. Then, the file system of the second layer generates the difference data indicating that the container image has been deleted. At this time, the container image is not deleted in the first layer. The third layer causes the process referring to the container image to refer to a current container image by merging the information of the first layer and the second layer.

Conventionally, there have been problems that correct data cannot be recovered since important data, such as the difference data, is encrypted by ransomware, and the like. The technology of the present disclosure aims at protecting such important data, such as the difference data.

Hereinafter, the second embodiment will be described. For the configurations the same as those in the first embodiment, the same numerals are assigned, and a description is omitted.

### < 1. Configuration of Information Processing System 2 >

Using Figure 13 and Figure 14, an information processing system 2 according to the present disclosure will be described.

Figure 13 is a diagram illustrating the configuration of the information processing system 2. The information processing system 2 includes an information processing device 50, an administrator terminal 20, and a network 30.

Figure 14 is a block diagram illustrating the functional configuration of the information processing device 50. As illustrated in Figure 14, the information processing device 50 includes a communication unit 110, a storage unit 520, and a control unit 230.

The storage unit 520 stores data and programs used by the information processing device 50. The storage unit 520 stores data related to containers, a system call table, a first system call function group, a second system call function group, and the like. Additionally, the storage unit 520 has a function as a database that manages the data related to containers as a file system including the above-described structure of the first layer to the third layer.

The control unit 230 demonstrates the functions illustrated in a reception control unit 131, a transmission control unit 132, a container control unit 133, a monitoring instruction unit 234, a rewriting unit 235, an obtaining unit 136, a monitoring unit 237, a display unit 238, a backup unit 239, and a restoration unit 240 by performing processing according to programs by the processor 11 of the information processing device 50.

The monitoring instruction unit 234 gives indication for starting and ending the monitoring of a system call to each unit.

The monitoring instruction unit 234 can employ an arbitrary timing as the timing for indicating the start of monitoring. For example, as the timing for the monitoring instruction unit 234 to indicate the start of monitoring, it is possible to employ the timing when difference data used for backup of a container image is generated, the timing when the difference data is stored in the storage unit 520, and the like. Note that the timings for the monitoring instruction unit 234 to indicate the start and end of monitoring may be manually indicated, may be periodic, or the like, or may be performed at all times.

Additionally, the monitor instruction unit 234 ends monitoring at the timing when an indication to end monitoring is given, the timing when all containers are deleted, and the like.

The rewriting unit 235 rewrites the system call table such that, when a processing target in a system call function to be called is a monitoring target that affects the identity of a container image, a second system call function is read that returns a result as in a case where the processing by the system call function is successfully executed, or a result indicating an error. Specifically, the rewriting unit 235 rewrites the address of a first system call function, which is the monitoring target of the system call table, to the address of a second system call function. Note that the second system call function is configured to include the address of the corresponding first system call function. This is because, in a case where a parameter is checked in the second system call function, when it is safe, the original first system call function is called to perform processing. Additionally, the rewriting unit 235 may be configured to replace the first system call function with the second system call function.

A monitoring target in the rewriting unit 235 is defined in advance as a combination of the content of processing of a process that calls a system call function, and at least one of the target file and target directory of the processing of the process. The monitoring target is, for example, at least one of the combinations of a directory, a file and processing of the following (1) to (14).
(1) deletion of a file under a directory where difference data is stored
(2) deletion of a directory where difference data is stored
(3) opening in a write mode to a file under a directory where difference data is stored
(4) movement of a file under a directory where difference data is stored
(5) movement of a directory where difference data is stored
(6) modification of a file name under a directory where difference data is stored
(7) modification of the name of a directory where difference data is stored
(8) a hard link to a directory where difference data is stored
(9) a hard link to a file under a directory where difference data is stored
(10) addition of a directory under a directory where difference data is stored
(11) a symbolic link to a directory where difference data is stored
(12) a symbolic link to a file under a directory where difference data is stored
(13) attribute change of a directory where difference data is stored
(14) attribute change of a file under a directory where difference data is stored
(15) mounting of other file system on a directory path including a directory where difference data is stored and those under the directory
(16) unmounting of a file system where difference data is stored

The reason the processing to a directory and the like includes a hard link is for preventing directories, files, and the like from being falsified via a hard link, in addition to under the directory where a container image is stored.

Additionally, the rewriting unit 235 rewrites the system call table at the timing when a kernel is read, when a monitoring start indication is given by the monitoring instruction unit 234, and the like. In addition, the rewriting unit 235 returns the rewritten system call table, when a monitoring end indication is given by the monitoring instruction unit 234.

The monitoring unit 237 determines whether or not a processing target in the first system call function to be called is a monitoring target that affects the identity of difference data. Specifically, first, the monitoring unit 237 calls the system call function to be called by referring to the rewritten system call table. In case of a system call function that is not rewritten, the first system call function is called by the system call table. The monitoring unit 237 executes the first system call function, and returns the processing result. As for the function of the monitoring unit 237, the function of the monitoring unit 137 can be applied to difference data.

The display unit 238 displays a screen for receiving specification of at least one piece of difference data of a plurality of pieces of difference data in the container-type virtualization environment, and cancellation of the specification. Specifically, the display unit 238 displays the screen for receiving the specification of a container image. The specified difference data serves as a parameter to be obtained by the obtaining unit 136, and difference data to be determined by the monitoring unit 237. The display unit 238 displays, for example, the screen on the administrator terminal 20.

Note that the parameter obtained by the obtaining unit 136 and the difference data to be determined by the monitoring unit 237 may be all difference data until explicitly selected.

The backup unit 239 obtains the difference data of a container image, and stores the difference data in the storage unit 520 as a backup file.

Specifically, the backup unit 239 obtains the difference data between a container image in the second layer and a container image in the first layer at an arbitrary timing. The arbitrary timing is periodic, a predetermined timing, or the like. The backup unit 239 obtains the difference data at an arbitrary backup timing, such as once an hour and once a day.

The backup unit 239 stores the obtained difference data in the storage unit 520. The difference data stored in the storage unit 520 by the backup unit 239 becomes data to be protected in the second embodiment.

Additionally, the backup unit 239 stores the difference data in the storage unit 520 at every arbitrary timing. At this time, the backup unit 239 may be configured to delete the difference data of a predetermined generation ago.

Upon reception of an input of a restoration indication, the restoration unit 240 uses a container image in the first layer and the difference data to restore the container image up to a defined generation.

Specifically, first, the restoration unit 240 receives an input of a restoration indication. The restoration indication includes the generation to be restored, the date and time to be restored, and the like.

Next, the restoration unit 240 obtains, from the storage unit 520, the difference data corresponding to the information such as the generation and the date and time included in the restoration indication, and a container image in the first layer.

Then, the restoration unit 240 uses the obtained difference data and the container image in the first layer to restore a container image. The restoration unit 240 generates the container image by merging the obtained difference data and the container image in the first layer. The restoration unit 240 stores the generated container image in the storage unit 520 as a new container image in the first layer.

### < 2. Operation >

Hereinafter, the processing in the information processing device 50 will be described with reference to the drawings. Note that a description of the difference data is omitted, since the monitoring indication processing and the monitoring target specification processing in the first embodiment can be applied.

### < Monitoring Processing >

Figure 15 is a flowchart illustrating an example of the flow of performing monitoring processing by the information processing device 50. In a situation where monitoring is started, the information processing device 50 executes the processing at the timing when the second system call function is called by the rewritten system call table. Note that, when a system call function that is not rewritten is called, ordinary system call function calling processing is performed.

In step S211, the monitoring unit 237 refers to a system call table in which a system call function to be called is rewritten. Accordingly, the monitoring unit 237 obtains the address of a second system call function.

In step S212, the monitoring unit 237 calls the second system call function to be called.

In step S213, the monitoring unit 237 obtains a parameter at the time when a system call function is called by a system call.

In step S214, the monitoring unit 237 determines whether or not the parameter is a monitoring target.

When it is not the monitoring target (N in the above-described step S214), in step S115, the monitoring unit 237 calls a first system call function.

In step S216, the monitoring unit 237 executes processing by the called first system call function.

In step S217, the monitoring unit 237 returns the processing result, and ends the processing.

On the other hand, when it is the monitoring target (Y in the above-described step S214), in step 118, the monitoring unit 237 returns a result as in a case where the processing by the first system call function is successfully executed, or a processing result indicating an error.

### < 3. Brief Summary >

As described above, according to the present disclosure, in the container-type virtualization environment, a parameter at the time when the first system call function is called by the system call is obtained, and when the processing target in the first system call function to be called that is indicated by the parameter is not a monitoring target that affects the identity of difference data used for backup of a container image in the container-type virtualization environment, the first system call function is called from the kernel, and the processing result of the first system call function is returned, and when the processing target in the first system call function to be called that is indicated by the parameter is the monitoring target, the first system call function is not called, and a result as in a case where the processing by the system call is successfully executed, or a processing result indicating an error is returned, and therefore the difference data of a running container image can be protected.

### < Other Modifications >

Although the embodiments according to the disclosure have been described above, these can be implemented in the other various kinds of modes, and can be implemented by making various kinds of omission, replacement, and modifications. These embodiments and modifications, and those to which omission, replacement and modifications have made are included in the technical scope of the claims and its equivalent scope.

For example, each function of the information processing device 10 may be configured in other device. For example, the storage unit 120 may be constructed as an external database.

Additionally, in the above-described embodiments, although the container image or the difference data for backup is used as the data to be protected, the data to be protected is not limited to this, and the technology (for example, UnionFS, and the like.) of transparently overlaying files and directories of a file system, without being limited to the container-type virtualization environment, and a file sharing system (for example, SAMBA, and the like) may be combined. The data to be protected is not limited to the container-type virtualization environment, and various kinds of data can be used as the data to be protected, as long as it is desired to protect the data from malicious operations by ransomware and the like.

Additionally, in the above-described embodiments, the container image or the difference data for backup is used as the data to be protected. These are not alternatives, and the technology of the present disclosure can employ, as the data to be protected, the container image and the difference data for backup. In this case, it is possible to realize protection of both by simply combining the technology disclosed in the first embodiment and the technology disclosed in the second embodiment.

### < Supplement >

The items described in each of the above embodiments are supplemented below.

(Supplement 1) A program for operating an information processing device (10) that includes a processor, and executes a container-type virtualization environment, the program causing the processor to execute: a step (S113) of obtaining a parameter at a time when a system call function is called by a system call; a step (S117) of calling a first system call function from a kernel, and returning a processing result of the first system call function, when a processing target in the first system call function to be called that is indicated by the parameter is not a monitoring target that affects an identity of a container image; and a step (S118) of returning a result as in a case where processing by the first system call function is successfully executed, or a processing result indicating an error, without calling the first system call function, when the processing target in the first system call function to be called that is indicated by the parameter is the monitoring target.

(Supplement 2) The program according to (supplement 1), wherein the monitoring target is defined in advance as a combination of a content of processing of a process that calls the first system call function, and at least one of a target file and a target directory of the processing of the process.

### (Supplement 3)

The program according to (supplement 1) or (supplement 2), executing: a step (S101) of rewriting an address of the first system call function of the monitoring target of the system call table to an address of a second system call function that returns a result as in a case where processing by the first system call function is successfully executed, or a result indicating an error, wherein, in the step of obtaining, a parameter at a time when the second system call function is called by the system call is obtained.

(Supplement 4) The program according to any of (supplement 1) to (supplement 3), executing: a step (S121) of displaying a screen for receiving specification of at least one or more container images of a plurality of container images in the container-type virtualization environment, wherein, in the step of obtaining, the parameter is obtained for the system call for the specified one or more container images.

(Supplement 5) The program according to any of (supplement 1) to (supplement 4), executing: a step (S101) of starting monitoring of the parameter by the step of obtaining at a timing when a container is generated on a container host based on a container image in the container-type virtualization environment, and the step of returning the processing result.

(Supplement 6) The program according to (supplement 5), executing: a step (S105, S106) of ending, when all the containers are deleted, monitoring of the parameter by the step of obtaining and the step of returning the processing result.

(Supplement 7) An information processing device (10) that includes a processor (11), and that executes a container-type virtualization environment, executing: a step (S113) of obtaining a parameter at a time when a system call function is called by a system call; a step (S117) of calling a first system call function from a kernel, and returning a processing result of the first system call function, when a processing target in the first system call function to be called that is indicated by the parameter is not a monitoring target that affects an identity of a container image; and a step (S118) of returning a result as in a case where processing by the first system call function is successfully executed, or a processing result indicating an error, without calling the first system call function, when the processing target in the first system call function to be called that is indicated by the parameter is the monitoring target.

(Supplement 8) A method of executing, by a computer (for example, the information processing device 10) that includes a processor (11), and that executes a container-type virtualization environment, a step (S113) of obtaining a parameter at a time when a system call function is called by a system call; a step (S117) of calling a first system call function from a kernel, and returning a processing result of the first system call function, when a processing target in the first system call function to be called that is indicated by the parameter is not a monitoring target that affects an identity of a container image; and a step (S118) of returning a result as in a case where processing by the first system call function is successfully executed, or a processing result indicating an error, without calling the first system call function, when the processing target in the first system call function to be called that is indicated by the parameter is the monitoring target.

(Supplement 9) An information processing device (10) including a processor (11), executing: a step (S113) of obtaining a parameter at a time when a system call function is called by a system call; a step (S117) of calling a first system call function from a kernel, and returning a processing result of the first system call function, when a processing target in the first system call function to be called that is indicated by the parameter is not a monitoring target that affects an identity of data to be protected; and a step (S118) of returning a result as in a case where processing by the first system call function is successfully executed, or a processing result indicating an error, without calling the first system call function, when the processing target in the first system call function to be called that is indicated by the parameter is the monitoring target.

(Supplement 10) The information processing device according to (supplement 9), wherein the data to be protected is a container image in a container-type virtualization environment.

(Supplement 11) The information processing device according to (supplement 10), wherein the monitoring target is defined in advance as a combination of a content of processing of a process that calls the first system call function, and at least one of a target file and a target directory of the processing of the process.

(Supplement 12) The information processing device according to (supplement 10), executing: a step (S101) of rewriting an address of the first system call function of the monitoring target of the system call table to an address of a second system call function that returns a result as in a case where processing by the first system call function is successfully executed, or a result indicating an error, wherein, in the step of obtaining, a parameter at a time when the second system call function is called by the system call is obtained.

(Supplement 13) The information processing device according to (supplement 10), executing: a step (S121) of displaying a screen for receiving specification of at least one or more container images of a plurality of container images in the container-type virtualization environment, wherein, in the step of obtaining, the parameter is obtained for the system call for the specified one or more container images.

(Supplement 14) The information processing device according to (supplement 10), executing: a step (S101) of starting monitoring of the parameter by the step of obtaining at a timing when a container is generated on a container host based on a container image in the container-type virtualization environment, and the step of returning the processing result.

(Supplement 15) The information processing device according to (supplement 14), executing: a step (S105, S106) of ending, when all the containers are deleted, monitoring of the parameter by the step of obtaining and the step of returning the processing result.

(Supplement 16) The information processing device according to (supplement 9), wherein the data to be protected is difference data used for backup of a container image in a container-type virtualization environment.

(Supplement 17) The information processing device according to (supplement 9), wherein the data to be protected is a container image in a container-type virtualization environment, and difference data used for backup of the container image.

(Supplement 18) A computer (for example, the information processing device 10) including a processor (11), executing: a step (S113) of obtaining a parameter at a time when a system call function is called by a system call; a step (S117) of calling a first system call function from a kernel, and returning a processing result of the first system call function, when a processing target in the first system call function to be called that is indicated by the parameter is not a monitoring target that affects an identity of data to be protected; and a step (S118) of returning a result as in a case where processing by the first system call function is successfully executed, or a processing result indicating an error, without calling the first system call function, when the processing target in the first system call function to be called that is indicated by the parameter is the monitoring target.

(Supplement 19) A program for operating an information processing device (10) including a processor, the program causing the processor to execute: a step (S113) of obtaining a parameter at a time when a system call function is called by a system call; a step (S117) of calling a first system call function from a kernel, and returning a processing result of the first system call function, when a processing target in the first system call function to be called that is indicated by the parameter is not a monitoring target that affects an identity of data to be protected; and a step (S118) of returning a result as in a case where processing by the first system call function is successfully executed, or a processing result indicating an error, without calling the first system call function, when the processing target in the first system call function to be called that is indicated by the parameter is the monitoring target.

### EXPLANATION OF REFERENCE NUMERALS

1 information processing system, 2 information processing system, 10 information processing device, 11 processor, 12 memory, 13 storage, 14 communication IF, 15 input/output IF, 20 administrator terminal, 30 network, 50 information processing device, 110 communication unit, 120 storage unit, 130 control unit, 131 reception control unit, 132 transmission control unit, 133 container control unit, 134 monitoring instruction unit, 135 rewriting unit, 136 obtaining unit, 137 monitoring unit, 138 display unit, 230 control unit, 234 monitoring instruction unit, 235 rewriting unit, 237 monitoring unit, 238 display unit, 239 backup unit, 240 restoration unit, 520 storage unit.

## Claims

1. An information processing device (10) including a processor (11), executing:
a step of obtaining a parameter at a time when a first system call function is called by a system call;
a step of calling the first system call function from a kernel, and returning a processing result of the first system call function, when a processing target in the first system call function to be called that is indicated by the parameter is not a monitoring target that affects path of an identity of data to be protected;
a step of returning a result as in a case where processing by the first system call function is successfully executed, or a processing result indicating an error, without calling the first system call function, when the processing target in the first system call function to be called that is indicated by the parameter is the monitoring target; **characterized by**
a step of starting monitoring of the parameter by the step of obtaining at a timing when a container is generated on a container host based on a container image in a
container-type virtualization environment, and the step of returning the processing result;
wherein the data to be protected is the container image in the container-type virtualization environment.

2. An information processing device (10), including a processor (11), executing:
a step of obtaining a parameter at a time when a first system call function is called by a system call;
a step of calling the first system call function from a kernel, and returning a processing result of the first system call function, when a processing target in the first system call function to be called that is indicated by the parameter is not a monitoring target that affects path of an identity of data to be protected;
a step of returning a result as in a case where processing by the first system call function is successfully executed, or a processing result indicating an error, without calling the first system call function, when the processing target in the first system call function to be called that is indicated by the parameter is the monitoring target, **characterized by**
a step of starting monitoring of the parameter by the step of obtaining at a timing when a container host is activated in a container-type virtualization environment, and the step of returning the processing result;
wherein the data to be protected is the container image in the container-type virtualization environment.

3. An information processing device (10) including a processor (11), executing:
a step of obtaining a parameter at a time when a first system call function is called by a system call;
a step of calling the first system call function from a kernel, and returning a processing result of the first system call function, when a processing target in the first system call function to be called that is indicated by the parameter is not a monitoring target that affects path of an identity of data to be protected;
a step of returning a result as in a case where processing by the first system call function is successfully executed, or a processing result indicating an error, without calling the first system call function, when the processing target in the first system call function to be called that is indicated by the parameter is the monitoring target, **characterized by**
a step of starting monitoring of the parameter by the step of obtaining at a timing when difference data used for backup of a container image is generated in a container-type virtualization environment, and the step of returning the processing result;
wherein the data to be protected is the difference data.

4. The information processing device (10) according to claim 1, executing:
a step of ending, when all the containers are deleted, monitoring of the parameter by the step of obtaining and the step of returning the processing result.

5. The information processing device (10) according to claim 1, wherein the monitoring target is defined in advance as a combination of a content of processing of a process that calls the first system call function, and at least one of a target file and a target directory of the processing of the process.

6. The information processing device (10) according to claim 1, executing:
a step of rewriting an address of the first system call function of the monitoring target of a system call table to an address of a second system call function that returns a result as in a case where processing by the first system call function is successfully executed, or a result indicating an error,
wherein, in the step of obtaining, a parameter at a time when the second system call function is called by the system call is obtained.

7. The information processing device (10) according to claim 1, executing:
a step of displaying a screen for receiving specification of at least one or more container images of a plurality of container images in the container-type virtualization environment; and
a step of receiving specification of at least one or more container images,
wherein, in the step of obtaining, the parameter is obtained for the system call for the specified one or more container images.

8. A method of executing, by a computer that includes a processor (11),
a step of obtaining a parameter at a time when a first system call function is called by a system call;
a step of calling the first system call function from a kernel, and returning a processing result of the first system call function, when a processing target in the first system call function to be called that is indicated by the parameter is not a monitoring target that affects a path of identity of data to be protected;
a step of returning a result as in a case where processing by the first system call function is successfully executed, or a processing result indicating an error, without calling the first system call function, when the processing target in the first system call function to be called that is indicated by the parameter is the monitoring target; **characterized by**
a step of starting monitoring of the parameter by the step of obtaining at a timing when a container is generated on a container host based on a container image in a
container-type virtualization environment, and the step of returning the processing result;
wherein the data to be protected is the container image in the container-type virtualization environment.

9. A program for operating an information processing device (10) including a processor (11), the program causing the processor (11) to execute:
a step of obtaining a parameter at a time when a first system call function is called by a system call;
a step of calling the first system call function from a kernel, and returning a processing result of the first system call function, when a processing target in the first system call function to be called that is indicated by the parameter is not a monitoring target that affects a path of identity of data to be protected;
a step of returning a result as in a case where processing by the first system call function is successfully executed, or a processing result indicating an error, without calling the first system call function, when the processing target in the first system call function to be called that is indicated by the parameter is the monitoring target; **characterized by**
a step of starting monitoring of the parameter by the step of obtaining at a timing when a container is generated on a container host based on a container image in a
container-type virtualization environment, and the step of returning the processing result;
wherein the data to be protected is the container image in the container-type virtualization environment.

10. A method of executing, by a computer that includes a processor (11),
a step of obtaining a parameter at a time when a first system call function is called by a system call;
a step of calling the first system call function from a kernel, and returning a processing result of the first system call function, when a processing target in the first system call function to be called that is indicated by the parameter is not a monitoring target that affects path of an identity of data to be protected;
a step of returning a result as in a case where processing by the first system call function is successfully executed, or a processing result indicating an error, without calling the first system call function, when the processing target in the first system call function to be called that is indicated by the parameter is the monitoring target, **characterized by**
a step of starting monitoring of the parameter by the step of obtaining at a timing when a container host is activated in a container-type virtualization environment, and the step of returning the processing result;
wherein the data to be protected is the container image in the container-type virtualization environment.

11. A program for operating an information processing device (10) including a processor (11), the program causing the processor (11) to execute:
a step of obtaining a parameter at a time when a first system call function is called by a system call;
a step of calling the first system call function from a kernel, and returning a processing result of the first system call function, when a processing target in the first system call function to be called that is indicated by the parameter is not a monitoring target that affects path of an identity of data to be protected;
a step of returning a result as in a case where processing by the first system call function is successfully executed, or a processing result indicating an error, without calling the first system call function, when the processing target in the first system call function to be called that is indicated by the parameter is the monitoring target, **characterized by**
a step of starting monitoring of the parameter by the step of obtaining at a timing when a container host is activated in a container-type virtualization environment, and the step of returning the processing result;
wherein the data to be protected is the container image in the container-type virtualization environment.

12. A method of executing, by a computer that includes a processor (11),
a step of obtaining a parameter at a time when a first system call function is called by a system call;
a step of calling the first system call function from a kernel, and returning a processing result of the first system call function, when a processing target in the first system call function to be called that is indicated by the parameter is not a monitoring target that affects path of an identity of data to be protected;
a step of returning a result as in a case where processing by the first system call function is successfully executed, or a processing result indicating an error, without calling the first system call function, when the processing target in the first system call function to be called that is indicated by the parameter is the monitoring target, **characterized by**
a step of starting monitoring of the parameter by the step of obtaining at a timing when difference data used for backup of a container image is generated in a container-type virtualization environment, and the step of returning the processing result;
wherein the data to be protected is the difference data.

13. A program for operating an information processing device (10) including a processor (11), the program causing the processor (11) to execute:
a step of obtaining a parameter at a time when a first system call function is called by a system call;
a step of calling the first system call function from a kernel, and returning a processing result of the first system call function, when a processing target in the first system call function to be called that is indicated by the parameter is not a monitoring target that affects path of an identity of data to be protected;
a step of returning a result as in a case where processing by the first system call function is successfully executed, or a processing result indicating an error, without calling the first system call function, when the processing target in the first system call function to be called that is indicated by the parameter is the monitoring target, **characterized by**
a step of starting monitoring of the parameter by the step of obtaining at a timing when difference data used for backup of a container image is generated in a container-type virtualization environment, and the step of returning the processing result;
wherein the data to be protected is the difference data.

## Patentansprüche

1. Informationsverarbeitungsvorrichtung (10), die einen Prozessor (11) einschließt, welcher folgendes ausführt:
einen Schritt des Erhaltens eines Parameters zu einer Zeit, wenn eine erste Systemaufruffunktion durch einen Systemaufruf aufgerufen wird;
einen Schritt des Aufrufens der ersten Systemaufruffunktion von einem Kernel und des Zurückgebens eines Verarbeitungsergebnisses der ersten Systemaufruffunktion, wenn ein Verarbeitungsziel in der aufzurufenden ersten Systemaufruffunktion, das durch den Parameter angegeben wird, kein Überwachungsziel ist, welches den Pfad einer Identität von zu schützenden Daten beeinflusst;
einen Schritt des Zurückgebens eines Ergebnisses, wie in einem Fall, wo Verarbeiten durch die erste Systemaufruffunktion erfolgreich ausgeführt wird, oder eines Verarbeitungsergebnisses, das einen Fehler angibt, ohne die erste Systemaufruffunktion aufzurufen, wenn das Verarbeitungsziel in der aufzurufenden ersten Systemaufruffunktion, das durch den Parameter angegeben wird, das Überwachungsziel ist;
**gekennzeichnet durch**
einen Schritt des Startens von Überwachen des Parameters durch den Schritt des Erhaltens an einem Zeitpunkt, wenn ein Container auf einem Container-Host generiert wird, basierend auf einem Container-Bild in einer Virtualisierungsumgebung vom Container-Typ, und den Schritt des Zurückgebens des Verarbeitungsergebnisses;
wobei die zu schützenden Daten das Container-Bild in der Virtualisierungsumgebung vom Container-Typ sind.

2. Informationsverarbeitungsvorrichtung (10), die einen Prozessor (11) einschließt, welcher folgendes ausführt:
einen Schritt des Erhaltens eines Parameters zu einer Zeit, wenn eine erste Systemaufruffunktion durch einen Systemaufruf aufgerufen wird;
einen Schritt des Aufrufens der ersten Systemaufruffunktion von einem Kernel und des Zurückgebens eines Verarbeitungsergebnisses der ersten Systemaufruffunktion, wenn ein Verarbeitungsziel in der aufzurufenden ersten Systemaufruffunktion, das durch den Parameter angegeben wird, kein Überwachungsziel ist, welches den Pfad einer Identität von zu schützenden Daten beeinflusst;
einen Schritt des Zurückgebens eines Ergebnisses, wie in einem Fall, wo Verarbeiten durch die erste Systemaufruffunktion erfolgreich ausgeführt wird, oder eines Verarbeitungsergebnisses, das einen Fehler angibt, ohne die erste Systemaufruffunktion aufzurufen, wenn das Verarbeitungsziel in der aufzurufenden ersten Systemaufruffunktion, das durch den Parameter angegeben wird, das Überwachungsziel ist;
**gekennzeichnet durch**
einen Schritt des Startens von Überwachen des Parameters durch den Schritt des Erhaltens zu einem Zeitpunkt, wenn ein Container-Host aktiviert wird, in einer Virtualisierungsumgebung vom Container-Typ, und den Schritt des Zurückgebens des Verarbeitungsergebnisses;
wobei die zu schützenden Daten das Container-Bild in der Virtualisierungsumgebung vom Container-Typ sind.

3. Informationsverarbeitungsvorrichtung (10), die einen Prozessor (11) einschließt, welcher folgendes ausführt:
einen Schritt des Erhaltens eines Parameters zu einer Zeit, wenn eine erste Systemaufruffunktion von einem Systemaufruf aufgerufen wird;
einen Schritt des Aufrufens der ersten Systemaufruffunktion von einem Kernel und des Zurückgebens eines Verarbeitungsergebnisses der ersten Systemaufruffunktion, wenn ein Verarbeitungsziel in der aufzurufenden ersten Systemaufruffunktion, das durch den Parameter angegeben wird, kein Überwachungsziel ist, welches den Pfad einer Identität von zu schützenden Daten beeinflusst;
einen Schritt des Zurückgebens eines Ergebnisses, wie in einem Fall, wo Verarbeiten durch die erste Systemaufruffunktion erfolgreich ausgeführt wird, oder eines Verarbeitungsergebnisses, das einen Fehler angibt, ohne die erste Systemaufruffunktion aufzurufen, wenn das Verarbeitungsziel in der aufzurufenden ersten Systemaufruffunktion, das durch den Parameter angegeben wird, das Überwachungsziel ist;
**gekennzeichnet durch**
einen Schritt des Startens von Überwachen des Parameters durch den Schritt des Erhaltens zu einem Zeitpunkt, wenn Differenzdaten generiert werden, die zum Backup eines Container-Bildes verwendet werden, in einer Virtualisierungsumgebung vom Container-Typ, und den Schritt des Zurückgebens des Verarbeitungsergebnisses;
wobei die zu schützenden Daten die Differenzdaten sind.

4. Informationsverarbeitungsvorrichtung (10) nach Anspruch 1, welche ausführt:
einen Schritt des Beendens des Überwachens des Parameters, wenn alle Container gelöscht sind, durch den Schritt des Erhaltens und den Schritt des Zurückgebens des Verarbeitungsergebnisses.

5. Informationsverarbeitungsvorrichtung (10) nach Anspruch 1, wobei das Überwachungsziel vorab als eine Kombination eines Inhalts der Verarbeitung eines Prozesses, der die erste Systemaufruffunktion aufruft, und mindestens eines von einer Zieldatei und einem Zielverzeichnis der Verarbeitung des Prozesses definiert ist.

6. Informationsverarbeitungsvorrichtung (10) nach Anspruch 1, welche ausführt:
einen Schritt des Umschreibens einer Adresse der ersten Systemaufruffunktion des Überwachungsziels einer Systemaufruftabelle in eine Adresse einer zweiten Systemaufruffunktion, die ein Ergebnis, wie in einem Fall, wo Verarbeiten durch die erste Systemaufruffunktion erfolgreich ausgeführt wird, oder ein Ergebnis, welches einen Fehler angibt, zurückgibt,
wobei in dem Schritt des Erhaltens ein Parameter zu einer Zeit, wenn die zweite Systemaufruffunktion durch den Systemaufruf aufgerufen wird, erhalten wird.

7. Informationsverarbeitungsvorrichtung (10) nach Anspruch 1, welche ausführt:
einen Schritt des Anzeigens eines Bildschirms zum Empfangen der Spezifikation von mindestens einem oder mehreren Container-Bildern von einer Vielzahl von Container-Bildern in der Virtualisierungsumgebung vom Container-Typ; und
einen Schritt des Empfangens der Spezifikation von mindestens einem oder mehreren Container-Bildern,
wobei in dem Schritt des Erhaltens der Parameter für den Systemaufruf für das spezifizierte eine Container-Bild oder die spezifizierten mehreren Container-Bilder erhalten wird.

8. Verfahren zum Ausführen durch einen Computer, der einen Prozessor (11) einschließt:
eines Schrittes des Erhaltens eines Parameters zu einer Zeit, wenn eine erste Systemaufruffunktion durch einen Systemaufruf aufgerufen wird;
eines Schrittes des Aufrufens der ersten Systemaufruffunktion von einem Kernel und des Zurückgebens eines Verarbeitungsergebnisses der ersten Systemaufruffunktion, wenn ein Verarbeitungsziel in der aufzurufendes ersten Systemaufruffunktion, das durch den Parameter angegeben wird, kein Überwachungsziel ist, welches den Pfad einer Identität von zu schützenden Daten beeinflusst;
eines Schrittes des Zurückgebens eines Ergebnisses, wie in einem Fall, wo Verarbeiten durch die erste Systemaufruffunktion erfolgreich ausgeführt wird, oder eines Verarbeitungsergebnisses, das einen Fehler angibt, ohne die erste Systemaufruffunktion aufzurufen, wenn das Verarbeitungsziel in der aufzurufenden ersten Systemaufruffunktion, das durch den Parameter angegeben wird, das Überwachungsziel ist;
**gekennzeichnet durch**
einen Schritt des Startens von Überwachen des Parameters durch den Schritt des Erhaltens an einem Zeitpunkt, wenn ein Container auf einem Container-Host generiert wird, basierend auf einem Container-Bild in einer Virtualisierungsumgebung vom Container-Typ, und den Schritt des Zurückgebens des Verarbeitungsergebnisses;
wobei die zu schützenden Daten das Container-Bild in der Virtualisierungsumgebung vom Container-Typ sind.

9. Programm zum Betreiben einer Informationsverarbeitungsvorrichtung (10), die einen Prozessor (11) einschließt, wobei das Programm bewirkt, dass der Prozessor (11) folgendes ausführt:
einen Schritt des Erhaltens eines Parameters zu einer Zeit, wenn eine erste Systemaufruffunktion von einem Systemaufruf aufgerufen wird;
einen Schritt des Aufrufens der ersten Systemaufruffunktion von einem Kernel und des Zurückgebens eines Verarbeitungsergebnisses der ersten Systemaufruffunktion, wenn ein Verarbeitungsziel in der aufzurufendes ersten Systemaufruffunktion, das durch den Parameter angegeben wird, kein Überwachungsziel ist, welches den Pfad einer Identität von zu schützenden Daten beeinflusst;
einen Schritt des Zurückgebens eines Ergebnisses, wie in einem Fall, wo Verarbeiten durch die erste Systemaufruffunktion erfolgreich ausgeführt wird, oder eines Verarbeitungsergebnisses, das einen Fehler angibt, ohne die erste Systemaufruffunktion aufzurufen, wenn das Verarbeitungsziel in der aufzurufenden ersten Systemaufruffunktion, das durch den Parameter angegeben wird, das Überwachungsziel ist;
**gekennzeichnet durch**
einen Schritt des Startens von Überwachen des Parameters durch den Schritt des Erhaltens an einem Zeitpunkt, wenn ein Container auf einem Container-Host generiert wird, basierend auf einem Container-Bild in einer Virtualisierungsumgebung vom Container-Typ, und den Schritt des Zurückgebens des Verarbeitungsergebnisses;
wobei die zu schützenden Daten das Container-Bild in der Virtualisierungsumgebung vom Container-Typ sind.

10. Verfahren zum Ausführen durch einen Computer, der einen Prozessor (11) einschließt,
eines Schrittes des Erhaltens eines Parameters zu einer Zeit, wenn eine erste Systemaufruffunktion von einem Systemaufruf aufgerufen wird,
eines Schrittes des Aufrufens der ersten Systemaufruffunktion von einem Kernel und des Zurückgebens eines Verarbeitungsergebnisses der ersten Systemaufruffunktion, wenn ein Verarbeitungsziel in der aufzurufenden ersten Systemaufruffunktion, das durch den Parameter angegeben wird, kein Überwachungsziel ist, welches den Pfad einer Identität von zu schützenden Daten beeinflusst;
einen Schritt des Zurückgebens eines Ergebnisses, wie in einem Fall, wo Verarbeiten durch die erste Systemaufruffunktion erfolgreich ausgeführt wird, oder eines Verarbeitungsergebnisses, das einen Fehler angibt, ohne die erste Systemaufruffunktion aufzurufen, wenn das Verarbeitungsziel in der aufzurufenden ersten Systemaufruffunktion, das durch den Parameter angegeben wird, das Überwachungsziel ist;
**gekennzeichnet durch**
einen Schritt des Startens von Überwachen des Parameters durch den Schritt des Erhaltens zu einem Zeitpunkt, wenn ein Container-Host aktiviert wird, in einer Virtualisierungsumgebung vom Container-Typ, und den Schritt des Zurückgebens des Verarbeitungsergebnisses;
wobei die zu schützenden Daten das Container-Bild in der Virtualisierungsumgebung vom Container-Typ sind.

11. Programm zum Betreiben einer Informationsverarbeitungsvorrichtung (10), die einen Prozessor (11) einschließt, wobei das Programm bewirkt, dass der Prozessor (11) folgendes ausführt:
einen Schritt des Erhaltens eines Parameters zu einer Zeit, wenn eine erste Systemaufruffunktion von einem Systemaufruf aufgerufen wird;
einen Schritt des Aufrufens der ersten Systemaufruffunktion von einem Kernel und des Zurückgebens eines Verarbeitungsergebnisses der ersten Systemaufruffunktion, wenn ein Verarbeitungsziel in der aufzurufenden ersten Systemaufruffunktion, das durch den Parameter angegeben wird, kein Überwachungsziel ist, welches den Pfad einer Identität von zu schützenden Daten beeinflusst;
einen Schritt des Zurückgebens eines Ergebnisses, wie in einem Fall, wo Verarbeiten durch die erste Systemaufruffunktion erfolgreich ausgeführt wird, oder eines Verarbeitungsergebnisses, das einen Fehler angibt, ohne die erste Systemaufruffunktion aufzurufen, wenn das Verarbeitungsziel in der aufzurufenden ersten Systemaufruffunktion, das durch den Parameter angegeben wird, das Überwachungsziel ist;
**gekennzeichnet durch**
einen Schritt des Startens von Überwachen des Parameters durch den Schritt des Erhaltens zu einem Zeitpunkt, wenn ein Container-Host aktiviert wird, in einer Virtualisierungsumgebung vom Container-Typ, und den Schritt des Zurückgebens des Verarbeitungsergebnisses;
wobei die zu schützenden Daten das Container-Bild in der Virtualisierungsumgebung vom Container-Typ sind.

12. Verfahren zum Ausführen durch einen Computer, der einen Prozessor (11) einschließt,
eines Schrittes des Erhaltens eines Parameters zu einer Zeit, wenn eine erste Systemaufruffunktion von einem Systemaufruf aufgerufen wird;
eines Schrittes des Aufrufens der ersten Systemaufruffunktion von einem Kernel und des Zurückgebens eines Verarbeitungsergebnisses der ersten Systemaufruffunktion, wenn ein Verarbeitungsziel in der aufzurufenden ersten Systemaufruffunktion, das durch den Parameter angegeben wird, kein Überwachungsziel ist, welches den Pfad einer Identität von zu schützenden Daten beeinflusst;
eines Schrittes des Zurückgebens eines Ergebnisses, wie in einem Fall, wo Verarbeiten durch die erste Systemaufruffunktion erfolgreich ausgeführt wird, oder eines Verarbeitungsergebnisses, das einen Fehler angibt, ohne die erste Systemaufruffunktion aufzurufen, wenn das Verarbeitungsziel in der aufzurufenden ersten Systemaufruffunktion, das durch den Parameter angegeben wird, das Überwachungsziel ist;
**gekennzeichnet durch**
einen Schritt des Startens von Überwachen des Parameters durch den Schritt des Erhaltens zu einem Zeitpunkt, wenn Differenzdaten generiert werden, die zum Backup eines Container-Bildes verwendet werden, in einer Virtualisierungsumgebung vom Container-Typ, und den Schritt des Zurückgebens des Verarbeitungsergebnisses;
wobei die zu schützenden Daten die Differenzdaten sind.

13. Programm zum Betreiben einer Informationsverarbeitungsvorrichtung (10), die einen Prozessor (11) einschließt, wobei das Programm bewirkt, dass der Prozessor (11) folgendes ausführt:
einen Schritt des Erhaltens eines Parameters zu einer Zeit, wenn eine erste Systemaufruffunktion von einem Systemaufruf aufgerufen wird;
einen Schritt des Aufrufens der ersten Systemaufruffunktion von einem Kernel und des Zurückgebens eines Verarbeitungsergebnisses der ersten Systemaufruffunktion, wenn ein Verarbeitungsziel in der aufzurufenden ersten Systemaufruffunktion, das durch den Parameter angegeben wird, kein Überwachungsziel ist, welches den Pfad einer Identität von zu schützenden Daten beeinflusst;
einen Schritt des Zurückgebens eines Ergebnisses, wie in einem Fall, wo Verarbeiten durch die erste Systemaufruffunktion erfolgreich ausgeführt wird, oder eines Verarbeitungsergebnisses, das einen Fehler angibt, ohne die erste Systemaufruffunktion aufzurufen, wenn das Verarbeitungsziel in der aufzurufenden ersten Systemaufruffunktion, das durch den Parameter angegeben wird, das Überwachungsziel ist;
**gekennzeichnet durch**
einen Schritt des Startens von Überwachen des Parameters durch den Schritt des Erhaltens zu einem Zeitpunkt, wenn Differenzdaten generiert werden, die zum Backup eines Container-Bildes verwendet werden, in einer Virtualisierungsumgebung vom Container-Typ, und den Schritt des Zurückgebens des Verarbeitungsergebnisses;
wobei die zu schützenden Daten die Differenzdaten sind.

## Revendications

1. Dispositif de traitement de l'information (10) qui comprend un processeur (11), exécutant :
une étape d'obtention d'un paramètre à un moment où une première fonction d'appel système est appelée par un appel système ;
une étape d'appel de la première fonction d'appel système depuis un noyau et de retour d'un résultat de traitement de la première fonction d'appel système, lorsqu'une cible de traitement dans la première fonction d'appel système à appeler qui est indiquée par le paramètre n'est pas une cible de surveillance qui affecte un chemin d'accès à une identité des données à protéger ;
une étape de retour d'un résultat comme dans un cas où le traitement par la première fonction d'appel système est exécuté avec succès, ou un résultat de traitement indiquant une erreur, sans appeler la première fonction d'appel système, lorsque la cible de traitement dans la première fonction d'appel système à appeler qui est indiquée par la paramètre est la cible de surveillance ;
**caractérisé par**
une étape de démarrage de la surveillance du paramètre par l'étape d'obtention, à un moment où un conteneur est généré sur un hôte de conteneur sur la base d'une image de conteneur dans un environnement de virtualisation de type conteneur et l'étape de retour du résultat du traitement ;
dans lequel les données à protéger sont l'image de conteneur dans l'environnement de virtualisation de type conteneur.

2. Dispositif de traitement de l'information (10), qui comprend un processeur (11), exécutant :
une étape d'obtention d'un paramètre à un moment où une première fonction d'appel système est appelée par un appel système ;
une étape d'appel de la première fonction d'appel système depuis un noyau et de retour d'un résultat de traitement de la première fonction d'appel système, lorsqu'une cible de traitement dans la première fonction d'appel système à appeler qui est indiquée par le paramètre n'est pas une cible de surveillance qui affecte un chemin d'accès à une identité des données à protéger ;
une étape de retour d'un résultat comme dans un cas où le traitement par la première fonction d'appel système est exécuté avec succès, ou un résultat de traitement indiquant une erreur, sans appeler la première fonction d'appel système, lorsque la cible de traitement dans la première fonction d'appel système à appeler qui est indiquée par le paramètre est la cible de surveillance ;
**caractérisé par**
une étape de démarrage de la surveillance du paramètre par l'étape d'obtention, à un moment où un hôte de conteneur est activé dans un environnement de virtualisation de type conteneur et l'étape de retour du résultat du traitement ;
dans lequel les données à protéger sont l'image de conteneur dans l'environnement de virtualisation de type conteneur.

3. Dispositif de traitement de l'information (10) qui comprend un processeur (11), exécutant :
une étape d'obtention d'un paramètre à un moment où une première fonction d'appel système est appelée par un appel système ;
une étape d'appel de la première fonction système depuis un noyau et de retour d'un résultat de traitement de la première fonction d'appel système, lorsqu'une cible de traitement dans la première fonction d'appel système à appeler, qui est indiquée par le paramètre, n'est pas une cible de surveillance qui affecte un chemin d'accès à une identité des données à protéger ;
une étape de retour d'un résultat, comme dans un cas où le traitement par la première fonction d'appel système est exécuté avec succès ou un résultat de traitement indiquant une erreur, sans appeler la première fonction d'appel système, lorsque la cible de traitement dans la première fonction d'appel système à appeler, qui est indiquée par le paramètre, est la cible de surveillance ;
**caractérisé par**
une étape de démarrage de la surveillance du paramètre par l'étape d'obtention à un moment où les données de différence utilisées pour la sauvegarde d'une image de conteneur sont générées dans un environnement de virtualisation de type conteneur, et l'étape de retour du résultat du traitement ;
dans lequel les données à protéger sont les données de différence.

4. Dispositif de traitement de l'information (10) selon la revendication 1, exécutant :
une étape de fin, lorsque tous les conteneurs sont supprimés, de la surveillance du paramètre par l'étape d'obtention et l'étape de retour du résultat du traitement.

5. Dispositif de traitement de l'information (10) selon la revendication 1, dans lequel la cible de surveillance est définie à l'avance comme une combinaison d'un contenu du traitement d'un processus qui appelle la première fonction d'appel système et d'au moins un fichier cible et/ou un répertoire cible du traitement du processus.

6. Dispositif de traitement de l'information (10) selon la revendication 1, exécutant :
une étape de réécriture d'une adresse de la première fonction d'appel système de la cible de surveillance d'une table d'appels système vers une adresse d'une deuxième fonction d'appel système qui renvoie un résultat comme dans un cas où un traitement par la première fonction d'appel système est exécuté avec succès ou un résultat indiquant une erreur,
dans lequel, lors de l'étape d'obtention, un paramètre est obtenu à un moment où la deuxième fonction d'appel système est appelée par l'appel système.

7. Dispositif de traitement de l'information (10) selon la revendication 1, exécutant :
une étape d'affichage d'un écran pour la réception des spécifications d'au moins une ou plusieurs images de conteneur parmi une pluralité d'images de conteneur dans l'environnement de virtualisation de type conteneur ; et
une étape de réception des spécifications d'au moins une ou plusieurs images de conteneur,
dans lequel au cours de l'étape d'obtention, le paramètre est obtenu pour l'appel système pour une ou plusieurs images de conteneur spécifiées.

8. Procédé d'exécution, par un ordinateur qui comprend un processeur (11) :
d'une étape d'obtention d'un paramètre à un moment où une première fonction d'appel système est appelée par un appel système ;
une étape d'appel de la première fonction d'appel système depuis un noyau et de retour d'un résultat de traitement de la première fonction d'appel système, lorsqu'une cible de traitement dans la première fonction d'appel système à appeler, qui est indiquée par le paramètre, n'est pas une cible de surveillance qui affecte un chemin d'accès à une identité des données à protéger ;
une étape de retour d'un résultat, comme dans un cas où le traitement par la première fonction d'appel système est exécuté avec succès ou un résultat de traitement indiquant une erreur, sans appeler la première fonction d'appel système, lorsque la cible de traitement dans la première fonction d'appel système à appeler, qui est indiquée par le paramètre, est la cible de surveillance ;
**caractérisé par**
une étape de démarrage de la surveillance du paramètre par l'étape d'obtention à un moment où un conteneur est généré sur un hôte de conteneur sur la base d'une image de conteneur dans un environnement de virtualisation de type conteneur et l'étape de retour du résultat de traitement ;
dans lequel les données à protéger sont les images de conteneur dans l'environnement de virtualisation de type conteneur.

9. Programme pour faire fonctionner un dispositif de traitement de l'information (10) qui comprend un processeur (11), le programme amenant le processeur (11) à exécuter :
une étape d'obtention d'un paramètre à un moment où une première fonction d'appel système est appelée par un appel système ;
une étape d'appel de la première fonction d'appel système depuis un noyau et de retour d'un résultat de traitement de la première fonction d'appel système, lorsqu'une cible de traitement dans la première fonction d'appel système à appeler qui est indiquée par le paramètre n'est pas une cible de surveillance qui affecte un chemin d'accès à une identité des données à protéger ;
une étape de retour d'un résultat comme dans un cas où le traitement par la première fonction d'appel système est exécuté avec succès, ou un résultat de traitement indiquant une erreur, sans appeler la première fonction d'appel système, lorsque la cible de traitement dans la première fonction d'appel système à appeler qui est indiquée par la paramètre est la cible de surveillance ;
**caractérisé par**
une étape de démarrage de la surveillance du paramètre par l'étape d'obtention, à un moment où un conteneur est généré sur un hôte de conteneur sur la base d'une image de conteneur dans un environnement de virtualisation de type conteneur et l'étape de retour du résultat du traitement ;
dans lequel les données à protéger sont l'image de conteneur dans l'environnement de virtualisation de type conteneur.

10. Procédé d'exécution, par un ordinateur qui comprend un processeur (11) :
une étape d'obtention d'un paramètre à un moment où une première fonction d'appel système est appelée par un appel système ;
une étape d'appel de la première fonction d'appel système depuis un noyau et de retour d'un résultat de traitement de la première fonction d'appel système, lorsqu'une cible de traitement dans la première fonction d'appel système à appeler qui est indiquée par le paramètre n'est pas une cible de surveillance qui affecte un chemin d'accès à une identité des données à protéger ;
une étape de retour d'un résultat comme dans un cas où le traitement par la première fonction d'appel système est exécuté avec succès, ou un résultat de traitement indiquant une erreur, sans appeler la première fonction d'appel système, lorsque la cible de traitement dans la première fonction d'appel système à appeler qui est indiquée par le paramètre est la cible de surveillance ;
**caractérisé par**
une étape de démarrage de la surveillance du paramètre par l'étape d'obtention, à un moment où un hôte de conteneur est activé dans un environnement de virtualisation de type conteneur et l'étape de retour du résultat du traitement ;
dans lequel les données à protéger sont l'image de conteneur dans l'environnement de virtualisation de type conteneur.

11. Programme pour faire fonctionner un dispositif de traitement de l'information (10) qui comprend un processeur (11), le programme amenant le processeur (11) à exécuter :
une étape d'obtention d'un paramètre à un moment où une première fonction d'appel système est appelée par un appel système ;
une étape d'appel de la première fonction d'appel système depuis un noyau et de retour d'un résultat de traitement de la première fonction d'appel système, lorsqu'une cible de traitement dans la première fonction d'appel système à appeler qui est indiquée par le paramètre n'est pas une cible de surveillance qui affecte un chemin d'accès à une identité des données à protéger ;
une étape de retour d'un résultat comme dans un cas où le traitement par la première fonction d'appel système est exécuté avec succès, ou un résultat de traitement indiquant une erreur, sans appeler la première fonction d'appel système, lorsque la cible de traitement dans la première fonction d'appel système à appeler qui est indiquée par le paramètre est la cible de surveillance ;
**caractérisé par**
une étape de démarrage de la surveillance du paramètre par l'étape d'obtention, à un moment où les données de différence utilisées pour la sauvegarde d'une image de conteneur sont générées dans un environnement de virtualisation de type conteneur, et l'étape de retour du résultat du traitement ;
dans lequel les données à protéger sont les données de différence.

12. Procédé d'exécution, par un ordinateur qui comprend un processeur (11) :
une étape d'obtention d'un paramètre à un moment où une première fonction d'appel système est appelée par un appel système ;
une étape d'appel de la première fonction d'appel système depuis un noyau et de retour d'un résultat de traitement de la première fonction d'appel système, lorsqu'une cible de traitement dans la première fonction d'appel système à appeler qui est indiquée par le paramètre n'est pas une cible de surveillance qui affecte un chemin d'accès à une identité des données à protéger ;
une étape de retour d'un résultat comme dans un cas où le traitement par la première fonction d'appel système est exécuté avec succès, ou un résultat de traitement indiquant une erreur, sans appeler la première fonction d'appel système, lorsque la cible de traitement dans la première fonction d'appel système à appeler qui est indiquée par le paramètre est la cible de surveillance ;
**caractérisé par**
une étape de démarrage de la surveillance du paramètre par l'étape d'obtention, à un moment où les données de différence utilisées pour la sauvegarde d'une image de conteneur sont générées dans un environnement de virtualisation de type conteneur, et l'étape de retour du résultat du traitement ;
dans lequel les données à protéger sont les données de différence.

13. Programme pour faire fonctionner un dispositif de traitement de l'information (10) qui comprend un processeur (11), le programme amenant le processeur (11) à exécuter :
une étape d'obtention d'un paramètre à un moment où une première fonction d'appel système est appelée par un appel système ;
une étape d'appel de la première fonction d'appel système depuis un noyau et de retour d'un résultat de traitement de la première fonction d'appel système, lorsqu'une cible de traitement dans la première fonction d'appel système à appeler qui est indiquée par le paramètre n'est pas une cible de surveillance qui affecte un chemin d'accès à une identité des données à protéger ;
une étape de retour d'un résultat comme dans un cas où le traitement par la première fonction d'appel système est exécuté avec succès, ou un résultat de traitement indiquant une erreur, sans appeler la première fonction d'appel système, lorsque la cible de traitement dans la première fonction d'appel système à appeler qui est indiquée par le paramètre est la cible de surveillance ;
**caractérisé par**
une étape de démarrage de la surveillance du paramètre par l'étape d'obtention, à un moment où les données de différence utilisées pour la sauvegarde d'une image de conteneur sont générées dans un environnement de virtualisation de type conteneur, et l'étape de retour du résultat du traitement ;
dans lequel les données à protéger sont les données de différence.
